(19) Europäisches Patentamt
European Patent Office
Office européen des brevets

(11) EP 1 124 636 B1

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(21) Anmeldenummer: **99969046.4**

(22) Anmeldetag: **10.09.1999**

(51) Int Cl.$^7$: **B01J 37/00**

(86) Internationale Anmeldenummer:
**PCT/DE99/02956**

(87) Internationale Veröffentlichungsnummer:
**WO 00/015341 (23.03.2000 Gazette 2000/12)**

(54) **VERFAHREN ZUR HERSTELLUNG AKTIVER UND/ODER SELEKTIVER FESTSTOFF-KATALYSATOREN AUS ANORGANISCHEN ODER METALLORGANISCHEN STOFFEN**

METHOD FOR PRODUCING ACTIVE AND/OR SELECTIVE SOLID CATALYSTS FROM INORGANIC OR ORGANOMETALLIC MATERIALS

PROCEDE DE PRODUCTION DE CATALYSEURS SOLIDES ACTIFS ET/OU SELECTIFS A PARTIR DE MATIERES INORGANIQUES OU ORGANOMETALLIQUES

(84) Benannte Vertragsstaaten:
**AT BE CH CY DE DK ES FI FR GB GR IE IT LI LU MC NL PT SE**

(30) Priorität: **11.09.1998 DE 19843242**

(43) Veröffentlichungstag der Anmeldung:
**22.08.2001 Patentblatt 2001/34**

(73) Patentinhaber: **Institut für Angewandte Chemie Berlin-Adlershof E.V.**
**12489 Berlin (DE)**

(72) Erfinder:
- **WOLF, Dorit**
  **D-12557 Berlin (DE)**
- **BUYEVSKAYA, Olga**
  **D-12487 Berlin (DE)**
- **BAERNS, Manfred**
  **D-14195 Berlin (DE)**
- **RODEMERCK, Uwe**
  **D-10243 Berlin (DE)**
- **CLAUS, Peter**
  **D-13057 Berlin (DE)**

(74) Vertreter: **Walter, Wolf-Jürgen et al**
**Patentanwälte Felke & Walter**
**Normannenstrasse 1-2**
**10367 Berlin (DE)**

(56) Entgegenhaltungen:
**WO-A-94/24314** **WO-A-98/03521**
**DE-A- 19 632 779** **US-A- 5 684 711**

- **MITTASCH A: "EARLY STUDIES OF MULTICOMPONENT CATALYSTS" ADVANCES IN CATALYSIS,US,SAN DIEGO, CA, Bd. 2, 1950, Seiten 81-104, XP000874209**
- **STEMMER W P C: "Rapid evolution of a protein in vitro by DNA shuffling" NATURE, 4. August 1994 (1994-08-04), XP002082182**
- **SIGMAN M S ET AL: "SCHIFF BASE CATALYSTS FOR THE ASYMMETRIC STRECKER REACTION IDENTIFIED AND OPTIMIZED FROM PARALLEL SYNTHETIC LIBRARIES" JOURNAL OF THE AMERICAN CHEMICAL SOCIETY,US,AMERICAN CHEMICAL SOCIETY, WASHINGTON, DC, Bd. 120, 1998, Seiten 4901-4902, XP000857794 ISSN: 0002-7863**
- **W P STEMMER ET AL: "Searching sequence space" BIO/TECHNOLOGY,US,NATURE PUBLISHING CO. NEW YORK, Bd. 13, 1. Juni 1995 (1995-06-01), Seiten 549-553, XP002095510 ISSN: 0733-222X**
- **WARD ET AL.: "Combinatorial library diversity: probability assessment of library populations" NUCLEIC ACIDS RESEARCH, Bd. 26, Nr. 4, Februar 1998 (1998-02), Seiten 879-886, XP002147467**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur schnellen und wirtschaftlichen Entwicklung von Feststoffkatalysatoren für beterogen katalysierte Reaktionsabläufe, wie sie bei Prozessen in der chemischen Produktion und in der Raffinerietechnik sowie bei der Umwelttechnik auftreten, durch ihre parallelisierte Ausprüfung nach neuen evolutionären Methoden.

Die Neuentwicklung oder Verbesserung heterogener anorganischer Feststoffkatalysatoren beruht auf empirischem Expertenwissen und Grundlagenwissen. Obwohl über die Wirkungsweise einzelner anorganischer Komponenten bzw. Verbindungen bei der Katalyse bestimmter Reaktionsteilschritte ein umfassendes Grundlagenwissen besteht, das für die Katalysatorentwicklung eine entscheidende Bedeutung hat, kann in der Praxis auf absehbare Zeit nicht darauf verzichtet werden, eine große Zahl von Katalysatoren, die aus verschiedenen aktiven Komponenten bzw. Phasen bestehen, herzustellen und auf ihre katalytische Wirkungsweise für die betrachtete Reaktion auszuprüfen.

Für die Durchführung einer vorgegebenen Reaktion wird es in der Regel mehrere katalytisch aktive Phasen geben, die in geeigneter Weise und in einem empirisch zu ermittelnden Verhältnis der aktiven Komponenten hergestellt und dabei zusammengebracht werden. Die Kenntnis der physikalischen, physikalisch-chemischen und katalytischen Eigenschaften von Festkörpern bildet eine rationale Basis für die Auswahl katalytisch wirksamer Materialien bei der Katalysatorentwicklung und -verbesserung. Selbst wenn im Idealfall die richtigen Einzelkomponenten bzw. Einzelphasen des Katalysators ausgewählt werden können, ist es erforderlich, das geeignete Massenverhältnis und Präparationsverfahren zu ermitteln.

Aus Advances in Catalysis 2(1950)81-104 ist die empirische Suche von Promotoren für anorganische Mehrstoffkatalysatoren bekannt. In der EP-A-0589384 wird ein iteratives Verfahren zur Ermittlung von Parameterwerten beschrieben, bei dem die Optimierungsstrategie darin besteht, der Versuchsanzahl jeder Ebene Bitstrings zuzuordnen, diese mit abgestufter Wahrscheinlichkeit nacheinander auszutauschen und dann in Realwerte umzuwandeln.

Eine geeignete Verfahrensweise für solche optimierprobleme ist die Anwendung kombinatorischer und evolutionärer Methoden (Ugi, I. et al., Chimia **51** (1997) 39 - 44). Diese Algorithmen wurden bislang in der Biochemie und Wirkstofforschung angewendet, um in möglichst kurzer Zeit neue Substanzen mit einer gewünschten spezifischen Wirkung aus einer Vielzahl von Verbindungen herauszufinden. Auch bei der Entwicklung homogener Katalysatoren wurden diese Prinzipien inzwischen angewandt (DE-A 197319904). Bei den genannten Anwendungen befinden sich die untersuchten Substanzen stets in Lösung. Der Wirkungsraum der gewünschten Eigenschaft (z. B. katalytische Aktivität und Selektivität) ist auf ein Molekül begrenzt, dessen optimale elementare Zusammensetzung und Struktur gesucht wird.

Im Gegensatz dazu gilt es in der heterogenen Katalyse die katalytisch wirksamsten anorganischen Feststoffmaterialien zu selektieren und ihre optimalen Massenanteile im endgültigen Katalysator zu ermitteln. Durch die Anwendung von neuen Strategien bei der Entwicklung heterogener Katalysatoren soll gegenüber den heute in der Praxis noch immer weitgehend empirisch ausgerichteten Methoden einerseits der experimentelle Aufwand bei der Katalysatorentwicklung reduziert und andererseits die Wahrscheinlichkeit des Auffindens eines optimalen Katalysators gesteigert werden.

Kombinatorik ist eine effektive Entwicklungsstrategie, wenn eine große Zahl von Parametern die Eigenschaften von Produkten beeinflußt. Trotz des großen Erfolgs dieser Strategie bei der Entwicklung neuer Arzneimittel, ist die Anwendung von kombinatorischen Methoden in der anorganischen Chemie und Katalyse ein neues Gebiet. Die erste Anwendung kombinatorischer Methoden bei der Entwicklung neuer Feststoffmaterialen wurde im Jahre 1995 von Schultz et al. Science, **268** (1995) 1738 und Science **270** (1995) 273) berichtet. Die Autoren haben gezeigt, daß die Feststoffbibliotheken auf Supraleitfähigkeit und Magnetoresistenz ausgeprüft werden konnten. Im gleichen Jahr wurden Bibliotheken von Komplexen für die selektive Bindung von Metallionen sowie von phosphinhaltigen peptidischen Liganden für die Rh(I)-katalysierte Hydrierung von Methyl-2-Acetamidoacrylat zu N-Acetylalaninmethylether hergestellt.

Es wurde die Synthese von Bibliotheken, die eine große Zahl (bis 26000) von Kombinationen anorganischer Materialien auf einer Siliziummatrix enthalten, beschrieben (E. Danielson et al., Nature 389 (1997) 944). Diese Technologie wurde u.a. am Beispiel der heterogen katalysierten CO Oxidation zur Ermittlung katalytisch aktiver Feststoffmaterialien ausprobiert. Die erhaltenen Ergebnisse wurden in dreidimensionalen Diagrammen dargestellt, aus denen die Kombinationen, die zu hohen $CO_2$-Ausbeuten und damit zur höchsten Katalysatoraktivität führten, ermittelt werden konnten.

Weiterhin wurde eine Synthese einer Bibliothek von Polyoxymetallaten mit Kegginstruktur beschrieben (C.L. Hill et al., J. Mol. Catal. A **114** (1996) 114); 39 homogengelöste Katalysatoren wurden bei der Mischung von wäßrigen Lösungen von $Na_2MO_4 \cdot 2H_2O$, $NaVO_3$ und $Na_2MPO_4$ (M = W, Mo) hergestellt. Die entstandenen Lösungen wurden ohne weitere Behandlungen bei der aeroben Oxidation von Tetrahydrothiophen zu Sulfoxid bei 95° eingesetzt. Der Eduktumsatz und die Produktbildung wurden mittels einer GLC-Analyse ermittelt und als dreidimensionales "reaction histogramm" präsentiert (x-Achse - Mo/W-Gehalt; y-Achse - V-Gehalt; z- Achse - Produktausbeute). Da bei den meisten

Katalysatoren vergleichbare Ergebnisse erreicht wurden, konnten keine aussagekräftigen Schlußfolgerungen getroffen werden.

Eine kombinatorische Strategie haben Mallouk et al. (Fuel Cell Seminar: Orlando, Florida (1996) 686, bei der Entwicklung und Optimierung von Legierungen aus drei Metallen, die als Anodenmaterialen bei der elektrochemischen Oxidation von Methanol verwendet werden, verfolgt. Für die Herstellung von Bibliotheken (9 Arrays mit 135 Zusammensetzungen) wurden fünf Edelmetalle (Pt, Ru, Os, Rh und Pd) verwendet. Diese Arbeit ist ein Beispiel für eine effektive parallelisierte Ausprüfung.

Kombinatorische Bibliotheken von auf $Al_2O_3$ geträgerten Metallkatalysatoren (u.a. Bi, Cr, Co, Cu, Ni, Pd) mit 16 Elementen einer Matrix wurden von Willson et al. bei der Wasserstoffoxidationsreaktion eingesetzt. Der Reaktor war mit einer speziellen Kamera für die in-situ IR-Thermographie ausgerüstet; die katalytische Aktivität wurde daher über die Zündungstemperatur ermittelt. Ein Nachteil der in diesen Arbeit angewendeten Analytik ist, daß Informationen über Produktselektivität fehlen.

Bei den bislang beschriebenen Methoden der Kombinatorik und ihrer Anwendung zur Ermittlung von Wirkstoffen und optimierter Katalysatoren werden sehr viele Synthesen für diese Zielmaterialien durchgeführt, die zeit- und mittelaufwendig sind.

Der Erfindung liegt daher die Aufgabe zugrunde, ein Verfahren zur Herstellung heterogener Feststoffkatalysatoren für eine vorgegebene Reaktion mit verringertem Aufwand zu entwickeln, bei dem die kombinatorischen Ansätze durch andere Optimierverfahren ergänzt oder ersetzt werden.

Erfindungsgemäß werden evolutionäre Prinzipien wie Kreuzung und Mutation eingesetzt, und dabei wird mit stochastischen Modifikationen der Katalysatorzusammensetzzung gearbeitet. Diese Methoden führen nicht zu einer reinen Zufallssuche, sondern durch eine aktivitäts- und selektivitätsbestimmte Auswahl der zu modifizierenden Katalysatoren zu einer gerichteten optimierung, die sich schnell und parallel auf mehrere erfolgversprechende Bereiche der Katalysatorzusammensetzung konzentriert.

Erfindungsgemäß wird dabei folgendermaßen vorgegangen:

(i) Herstellung von Substanzbibliotheken aus katalytischen Einzelmaterialien und deren Mischungen,
(ii) Ausprüfung von Materialien, das sind Einzelmaterialien und deren Mischungen aus diesen Substanzbibliotheken, auf ihre katalytische Wirkungsweise,
(iii) Ermittlung der chemischen Struktur der katalytisch aktiven Materialien,
(iv) aufbauend auf den nach (ii) und (iii) gewonnenen Ergebnisse erfolgt eine iterative Wiederholung der Schritte (i) bis (iii) bzw. auch (iv) mit dem Ziel der Katalysatoroptimierung.

Diese Vorgehensweise läßt sich bei der Entwicklung heterogener Katalysatoren wie folgt verwirklichen bzw. praktisch umsetzen:

Im ersten Schritt (i) werden primäre Komponenten (Einzelmaterialien bzw. katalytisch aktive Phasen), die für die einzelnen Reaktionsschritte der betrachteten heterogen katalysierten Reaktion bereits beschrieben oder bekannt oder empirisch oder intuitiv ermittelt wurden, ausgewählt und in die Substanzbibliothek übernommen; wobei durch zufällige Wahl willkürliche Mischungen aus diesen Einzelmaterialien erzeugt werden. Im zweiten Schritt (ii) werden diese so endgültig festgelegten und hergestellten Materialien (1. Generation von Katalysatoren) katalytisch ausgeprüft (z.B. Aktivität, Selektivität, Raum-Zeit-Ausbeute); diese beiden Vorgänge, d. h. Herstellung und Ausprüfung, werden jeweils möglichst weitgehend parallelisiert durchgeführt. Die im Sinne der Katalysatoroptimierung erfolgreichen Materialien des Schritts (ii) werden insbesondere im Hinblick auf ihre reproduzierbare Herstellung in Schritt (iii) physikalisch und physikalisch-chemisch charakterisiert und stellen die Grundlage für eine folgende 2. Generation von Katalysatoren dar. Diese zweite Generation wird nach Methoden der biologischen Evolution aus den erfolgreichen Materialien der ersten Generation erzeugt und dann den Schritten (ii) und (iii) unterworfen.

Unter Methoden der biologischen Evolution werden hier Kreuzung und Mutation verstanden. Dabei wird mittels stochastischer Verfahren, wie Zufallsgeneratoren, Würfeln, Ziehungen eine Veränderung von Katalysatorkomponenten und/oder Mengenanteilen eines oder mehrerer Katalysatoren eines ausgewählten Pools von Katalysatoren der vorigen Generation durchgeführt durch willkürlich und/oder zufällige Neustrukturierung.

Bei der zweiten und den nachfolgenden Iterationen werden jeweils die erfolgreichsten Katalysatoren aller Generationen zu Grunde gelegt, deren Gesamtzahl zur Gesamtzahl der Katalysatoren einer Generation jedoch im allgemeinen klein ist; sie wird in der Regel 1 bis 50 % der Katalysatoren einer Generation betragen.

Die geschilderten Iterationen werden solange fortgeführt, bis keine Verbesserung des katalytischen Verhaltens der Materialien hinsichtlich Aktivität und/oder Selektivität für die betrachtete Reaktion mehr festzustellen sind.

Das Verfahren zur Auswahl von Komponenten für die Herstellung aktiver und/oder selektiver Feststoff-Katalysatoren aus anorganischen oder metallorganischen Stoffen oder Gemischen davon besteht in den folgenden Stufen,

in denen

(a) für eine katalytische Reaktion eine Anzahl $n_1$ von Feststoff-Katalysatoren aus den Elementen des Periodensystems der Elemente (PSE) in Form von Verbindungen der Formel (I)

$$(A^1_{a_1} .. A^i_{a_i})\text{-}(B^1_{b_1} .. B^j_{b_j})\text{-}(D^1_{d_1} .. D^k_{d_k})\text{-}(T^1_{t_1} .. T^l_{t_l})\text{-}O_p \qquad \text{(I)}$$

hergestellt werden, worin $A^1$ .. $A^i$ i verschiedene Hauptkomponenten sind, die aus den Elementen des PSE, ausgenommen die Transurane und Edelgase, vorzugsweise aus der Gruppe
Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce und Nd ausgewählt werden und die Anzahl i zwischen 1 und 10 liegt,
$B^1$ .. $B^j$ j verschiedene Nebenkomponenten sind, die aus der Gruppe der Elemente
Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce und Nd ausgewählt werden, und die Anzahl j zwischen 1 und 10 liegt,
$D^1$ .. $D^k$ k verschiedene Dotierungselemente sind, die aus der Gruppe der Elemente
Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, Si, Sn, Pb, N, P, As, Sb, Bi, S, Se, Te, F, Cl, Ce und Nd ausgewählt werden, und die Anzahl k zwischen 1 und 10 liegt,
$T^1$ .. $T^l$ l verschiedene Trägerkomponenten sind, die aus Oxiden, Carbonaten, Carbiden, Nitriden, Boriden der Elemente Mg, Ca, Sr, Ba, La, Zr, Ce, Al, Si oder einer Mischphase von zwei oder mehreren davon bestehen, und die Anzahl 1 zwischen 1 und 10 liegt,
und 0 Sauerstoff ist,
$a_1$..$a_i$ sind gleiche oder verschiedene Stoffmengenanteile von 0 bis 100 Mol-% mit der Maßgabe, daß die Stoffmengenanteile $a_1$..$a_i$ nicht gleichzeitig alle 0 sein können,
$b_1$ .. $b_j$ Stoffmengenanteile von 0 bis 90 Mol.-% sind, vorzugsweise 0 bis 50 Mol.-%,
$d_1$ .. $d_k$ Stoffmengenanteile von 0 bis 10 Mol.-% sind,
$t_1$ .. $t_l$ Stoffmengenanteile von 0 bis 99,99 Mol.-% sind,
p ein Stoffmengenanteil von 0 bis 75 Mol.-% ist, wobei die Summe aller Stoffmengenanteile $a_i + b_j + d_k + t_1$ nicht größer als 100% sein darf, und
die Anzahl $n_1$ mengenmäßig und/oder chemisch unterschiedlich zusammengesetzter Katalysatoren im Bereich von 5 bis 100.000 bevorzugt jedoch im Bereich von 5 bis 100 liegt;
(b) die Aktivität und/oder Selektivität der nach (a) hergestellten $n_1$ Feststoff-Katalysatoren der 1. Generation für eine katalytische Reaktion in einem Reaktor oder in mehreren parallel geschalteten Reaktoren experimentell ermittelt werden;
(c) von der Anzahl der $n_1$ Katalysatoren der 1. Generation eine Anzahl von 1 - 50 % mit den höchsten Aktivitäten für eine spezifische Reaktion und/oder höchsten Selektivitäten für das gewünschte Produkt oder Produktgemisch der katalytischen Reaktion als Anzahl $n_2$ ausgewählt wird;
(d) die in der Anzahl $n_2$ Katalysatoren enthaltenen Katalysatorkomponenten mit einer festgelegten Wahrscheinlichkeit W, die sich für jede der Komponenten $A^1$ .. $A^i$, $B^1$ .. $B^j$, $D^1$ .. $D^k$ und $T^1$ .. $T^l$ aus den entsprechenden Gleichungen

$$W_A = \frac{1}{i \cdot n_2} \cdot 100\%,\ W_B = \frac{1}{j \cdot n_2} \cdot 100\%,\ W_D = \frac{1}{k \cdot n_2} \cdot 100\%,\ W_T = \frac{1}{l \cdot n_2} \cdot 100\%$$

ergibt, zwischen jeweils 2 mit einer Wahrscheinlichkeit $W_{Kat} = \frac{1}{n_2} \cdot 100\%$ aus der Menge $n_2$ ausgewählten Ratalysatoren ausgetauscht werden und /oder daß die Stoffmengen $a_1$ .. $a_i$, $b_1$ .. $b_j$, $d_1$ .. $d_k$ und $t_1$ .. $t_l$ der Katalysatorkomponenten $A^1$ .. $A^i$, $B^1$ .. $B^j$, $D^1$ .. $D^k$ und $T^1$ .. $T^l$ bei einigen der mit der Wahrscheinlichkeit $W_{Kat} = \frac{1}{n_2} \cdot 100\%$ ausgewählten Katalysatoren variiert werden, indem neue Werte für die Stoffmengenanteile $a_1$ .. $a_i$, $b_1$ .. $b_j$, $d_1$ .. $d_k$ und $t_1$ .. $t_l$ innerhalb der unter (a) definierten Grenzen festgelegt werden;
auf diese Weise werden neue Katalysatoren der allgemeinen Formel (I) mit der unter (a) genannten Bedeutung von $A^1$ .. $A^i$, $B^1$ .. $B^j$, $D^1$ .. $D^k$, $T^1$ .. $T^l$, $a_1$ .. $a_i$, $b_1$ .. $b_j$, $d_1$ .. $d_k$ und $t_1$ .. $t_l$ und p in einer Anzahl $y_2$ hergestellt, die die 2. Generation von Katalysatoren bilden;
(e) die Aktivitäten und/oder Selektivitäten der $y_2$ Feststoff-Katalysatoren der 2. Generation für die gleiche spezifische Reaktion wie in (b) in einem oder mehreren Reaktoren experimentell ermittelt werden;

(f) eine Zahl von $n_3$ Feststoff-Katalysatoren der 2. Generation, die die höchsten Aktivitäten für die katalytische Umsetzung und/oder die höchsten Selektivitäten für das gewünschte Produkt und Produktgemisch aus allen Feststoff-Katalysatoren der 1. und 2. Generation aufweisen, ausgewählt werden, wobei die Anzahl $n_3$ 1 bis 50 % der Zahl $n_1$ entspricht;

(g) die in der Anzahl $n_3$ Katalysatoren enthaltenen Katalysatorkomponenten mit einer festgelegten Wahrscheinlichkeit W, die sich für jede der Komponenten $A^1 .. A^i$, $B^1 .. B^j$, $D^1 .. D^k$ und $T^1 .. T^l$ aus den entsprechenden Gleichungen

$$W_A = \frac{1}{i \cdot n_3} \cdot 100\%,\ W_B = \frac{1}{j \cdot n_3} \cdot 100\%,\ W_D = \frac{1}{k \cdot n_3} \cdot 100\%,\ W_T = \frac{1}{l \cdot n_3} \cdot 100\%$$

ergibt, zwischen jeweils 2 mit einer Wahrscheinlichkeit $W_{Kat} = \frac{1}{n_3} \cdot 100\%$ aus der Menge $n_3$ ausgewählten Katalysatoren ausgetauscht werden und /oder daß die Stoffmengen $a_1 .. a_i$, $b_1 .. b_j$, $d_1 .. d_k$ und $t_1 .. t_l$ der Katalysatorkomponenten $A^1 .. A^i$, $B^1 .. B^j$, $D^1 .. D^k$ und $T^1 .. T^l$ bei einigen der mit der Wahrscheinlichkeit $W_{Kat} = \frac{1}{n_3} \cdot 100\%$ ausgewählten Katalysatoren variiert werden, indem neue Werte für die Stoffmengenanteile $a_1 .. a_i$, $b_1 .. b_j$, $d_1 .. d_k$ und $t_1 .. t_l$ innerhalb der unter (a) definierten Grenzen festgelegt werden;

auf diese Weise werden neue Katalysatoren der allgemeinen Formel (I) mit der unter (a) genannten Bedeutung von $A^1 .. A^i$, $B^1 .. B^j$, $D^1 .. D^k$, $T^1 .. T^l$, $a_1 .. a_i$, $b_1 .. b_j$, $d_1 .. d_k$ und $t_1 .. t_l$ und p in einer Anzahl $y_3$ hergestellt, die die 3. Generation von Katalysatoren bilden;

(h) die Aktivität und/oder Selektivität der nach (g) hergestellten $y_3$ neuen Katalysatoren der 3. Generation für die gleiche spezifische Reaktion wie unter (b) in einem oder mehreren Reaktoren ermittelt wird;

(i) eine Zahl von $n_{n+1}$ Feststoff-Katalysatoren der n-ten Generation, die die höchsten Aktivitäten für die katalytische Umsetzung und/oder die höchsten Selektivitäten für das gewünschte Produkt und Produktgemisch aus allen Feststoff-Katalysatoren der 1. bis n-ten Generation aufweisen, ausgewählt werden, wobei die Anzahl $n_{n+1}$ 1 bis 50 % der Zahl $n_1$ entspricht;

(j) die in der Anzahl $n_{n+1}$ Katalysatoren enthaltenen Katalysatorkomponenten mit einer festgelegten Wahrscheinlichkeit W, die sich für jede der Komponenten $A^1 .. A^i$, $B^1 .. B^j$, $D^1 .. D^k$ und $T^1 .. T^l$ aus den entsprechenden Gleichungen

$$W_A = \frac{1}{i \cdot n_{n+1}} \cdot 100\%,\ W_B = \frac{1}{j \cdot n_{n+1}} \cdot 100\%,\ W_D = \frac{1}{k \cdot n_{n+1}} \cdot 100\%,\ W_T = \frac{1}{l \cdot n_{n+1}} \cdot 100\%$$

ergibt, zwischen jeweils 2 mit einer Wahrscheinlichkeit $W_{Kat} = \frac{1}{n_{n+1}} \cdot 100\%$ aus der Menge $n_{n+1}$ ausgewählten Katalysatoren ausgetauscht werden und /oder daß die Stoffmengen $a_1 .. a_i$, $b_1 .. b_j$, $d_1 .. d_k$ und $t_1 .. t_l$ der Katalysatorkomponenten $A^1 .. A^i$, $B^1 .. B^j$, $D^1 .. D^k$ und $T^1 .. T^l$ bei einigen der mit der Wahrscheinlichkeit $W_{Kat} = \frac{1}{n_{n+1}} \cdot 100\%$ ausgewählten Katalysatoren variiert werden, indem neue Werte für die Stoffmengenanteile $a_1 .. a_i$, $b_1 .. b_j$, $d_1 .. d_k$ und $t_1 .. t_l$ innerhalb der unter (a) definierten Grenzen festgelegt werden;

auf diese Weise werden neue Katalysatoren der allgemeinen Formel (I) mit der unter (a) genannten Bedeutung von $A^1 .. A^i$, $B^1 .. B^j$, $D^1 .. D^k$, $T^1 .. T^l$, $a_1 .. a_i$, $b_1 .. b_j$, $d_1 .. d_k$ und $t_1 .. t_l$ und p in einer Anzahl $y_{n+1}$ hergestellt, die die (n+1)-ten Generation von Katalysatoren bilden;

(k) die Aktivität und/oder Selektivität der nach (g) hergestellten $y_{n+1}$ neuen Katalysatoren der (n+1)-ten Generation für die gleiche Reaktion wie unter (b) in einem oder mehreren Reaktoren ermittelt wird;

(l) die Auswahl gemäß den Stufen (c) + (f) + (i), die Herstellung einer neuen Katalysatorgeneration gemäß den Stufen (d), (g), (j) und die Aktivitäts-/Selektivitätsermittlung gemäß den Stufen (e) + (h) + (k) bis zum Erhalt einer Katalysator-Generation fortgeführt wird, bei der die Aktivität und/oder Selektivität gegenüber den vorangegangenen Generationen im arithmetischen Mittel nicht oder nicht mehr signifikant (>1 %) erhöht ist.

Die Auswahlanzahl $n_2$, $n_3$ oder $n_{n+1}$ entspricht vorzugsweise 5 bis 30 % der Zahl $n_1$.

Der Austausch der Katalysatoren oder die Variierung der Stoffmengen oder Austausch und Variierung in den Abschnitten (d), (g) und (j) wird vorzugsweise mittels eines numerischen Zufallsgenerators durchgeführt. Dabei werden vorteilhaft die Programmcodes G05CAF, G05DYF, G05DZF oder G05CCF der NAG Library (NAG FORTRAN Workstation Library, NAG Group Ltd., 1986) eines numerischen Zufallsgenerators eingesetzt.

Es können auch Zufallsgeneratoren verwendet werden,die frei im Internet verfügbar sind oder solche, wie "Numerical Recipes in FORTRAN, PASCAL oder C " Cambridge University Press, oder IMSL Libraries des FORTRAN

compilers DIGITAL visual Fortran Professional Edition, die kommerziell als Software erhältlich sind. Auch andere stochastische Verfahren, wie Würfeln oder Ziehungen können für diese Stufe verwendet werden.

Unter Einsatz derartiger Verfahren können z.B. in Stufe (d) oben mehrere Katalysatorkomponenten ausgewählt werden und deren entsprechende molare Stoffmengenanteile zwischen den zuvor ausgewählten Katalysatorkomponenten vertauscht werden (Kreuzung), Dadurch kann auch durch Mengenanteile, die von einem endlichen. Wert auf Null oder von Null auf einen endlichen Wert geändert werden, ein Austausch der einzelnen Katalysatorkomponenten selbst mittels Kreuzung bewirkt werden, wodurch insgesamt eine neue Zusammensetzung des Katalysators der neuen Generation erhalten wird. Es können aber auch die z.B. mittels Zufallsgenerator ausgewählten Katalysatorkomponenten durch Multiplikation mit Faktoren, die aus der Menge der reellen Zahlen zwischen 0 und 10000 entweder zufällig bestimmt oder freiwählbar festgelegt werden, verringert oder vergrößert werden (Mutation), so daß der neue Katalysator der nächsten Katalysatorgeneration zwar dieselben Komponenten enthält, diese jedoch in anderer Konzentration vorliegen und damit auch die Verhältnisse der Komponenten untereinander verändert sein können.

In der Verfahrensstufe (a) liegt vorzugsweise die Anzahl $n_1$ mengenmäßig und/oder chemisch unterschiedlich zusammengesetzter Katalysatoren im Bereich von 5 bis 100.

Vorteilhaft erfolgt die Herstellung der Katalysatorgemische durch Mischen von Salzlösungen der Elemente der Komponente $A^1$ .. $A^i$, $B^1$ .. $B^j$, $D^1$ .. $D^k$ und $T^1$ .. $T^l$ und anschließende thermische Behandlung in Gegenwart einer reaktiven oder inerten Gasphase (im folgenden bezeichnet als Temperung) oder durch gemeinsame Fällung von schwerlöslichen Verbindungen und anschließende Temperung oder durch Beaufschlagung der Trägerkomponenten $T^1$ .. $T^l$ mit Salzlösungen oder gasförmigen Verbindungen der Komponenten $A^1$ .. $A^i$, $B^1$ .. $B^j$, $D^1$ .. $D^k$ und anschließende Temperung erfolgt, wobei die eingesetzten Salze Nitrate, Sulfate, Phosphate, Carbonate, Halogenide, oxalate, Carboxylate oder Gemische davon oder Carbonyle oder Acetylacetonate sein können.

Die Herstellung neuer Katalysatorgemische der 2. bis n-ten Generation kann durch mechanisches Mischen der hergestellten Feststoffkatalysatoren der jeweils vorangegangenen Generationen erfolgen. Weitere vorteilhafte Ausgestaltungen bestehen darin, daß die katalytische Reaktion mit flüssigen, verdampften oder gasförmigen Reaktanten durchgeführt wird und daß die Reaktanten für die katalytische Reaktion mehreren Reaktoren zugeführt werden, und der die Reaktoren verlassende Produktstrom für jeden einzelnen Reaktor getrennt analysiert wird.

Zur Durchführung der katalytischen Reaktion werden vorzugsweise 5 bis 1000 Reaktoren, bestehend aus Räumen mit darin angeordnetem katalytisch aktiven Material, parallel zueinander geschaltet oder in Arrays angeordnet, wobei die Durchmesser dieser Räume 100 µm bis 10 mm und die Längen 1 mm bis 100 mm betragen. Dabei wird bei vorgegebener Reaktorlänge der Durchsatz der Reaktanten so gewählt, daß der gewünschte Umsatzgrad erreicht wird.

Als Reaktor kann ein Monolith mit vielen parallelen Kanälen, die wahlweise auf der Ein- oder Austrittsseite einzeln oder in größerer Zahl auch während der katalytischen Reaktion verschlossen werden können oder ein poröser Modul bevorzugt mit in Strömungsrichtung der Reaktionsmischung parallel verlaufenden Kanälen, die wahlweise auf der Ein- oder Austrittsseite einzeln oder in größerer Zahl auch während der katalytischen Reaktion verschließbar sind, eingesetzt werden.

Vorteilhaft werden die Reaktanten für die katalytische Reaktion den obigen Reaktoren zugeführt, und die Zusammensetzung der die Reaktoren verlassenden Produktströme durch eine Meßsonde analysiert wird, wobei die Meßsonde zweidimensional über die Austrittsquerschnitte aller Reaktoren geführt wird oder die Reaktoren zweidimensional gegenüber der Meßsonde bewegt werden und der von der Meßsonde aufgenommene Teil der Produktströme dem Analysator zugeführt wird. Als Analysator kann ein Gaschromatograph, ein Massenspektrometer oder ein anderes für die Analyse von Gasund Flüssigkeitsgemischen eingesetzt werden.

Der Reaktionsmischung können geeignete Indikatoren zugesetzt werden, die die Anwesenheit einzelner oder mehrerer Edukte oder Produkte anzeigen und so deren Analyse in der Reaktantenmischung ermöglichen. Die Herstellung der Feststoff-Katalysatoren kann aus Feststoffen, Lösungen oder Dispersionen erfolgen.

Der in der obigen Beschreibung verwendete Begriff "aktiv oder selektiv verbesserte Katalysatoren" bedeutet, daß die Katalysatoren hinsichtlich ihrer Aktivität oder ihrer Selektivität oder hinsichtlich beider Eigenschaften verbesserte Werte zeigen. Dem gleichzusetzen ist die Verbesserung der Raum-Zeit-Ausbeute.

Unter "stochastische Verfahren" werden alle nicht streng deterministischen Vorgänge mit einer Zufallskomponente verstanden. Die erfindungsgemäßen stochastischen Verfahren sind endliche und diskrete Verfahren.

Die Erfindung wird durch die beigefügte Zeichnung näher erläutert. Darin bedeutet

Fig. 1 : Diagramm Änderung der Ausbeute der jeweils besten 5 Katalysatoren während der ersten drei Generationen der Katalysatoroptimierung gemäß Beispiel 1

Fig. 2 : Diagramm wie Fig.1 gemäß Beispiel 2

Die Erfindung wird durch die nachfolgenden Beispiele erläutert. Beispiel 1 betrifft die Suche nach dem optimalen Katalysator für die partielle Oxidation von Propan zu seinen Sauerstoffderivaten, die die Summe von Acrolein, Essigsäure und Acrylsäure umfaßt.

**Beispiel 1**

Es wird die Auswahl und Mischung einzelner Katalysatorkomponenten, die hier in Haupt-, Neben-, Dotierungs- und Trägerkomponenten unterteilt werden, sowie die Austestung und weitere Verbesserung der Katalysatorgemische unter Verwendung evolutionärer Optimerungsstrategien demonstriert.

Es wurden zunächst 30 Katalysatoren (Phase I), danach 10 Katalysatoren (Phase II) und schließlich weitere 10 Katalysatoren (Phase III), bestehend aus Hauptkomponenten, Nebenkomponenten, Dotierungskomponenten und Trägermaterial mit dem Ziel präpariert, Propan zu seinen Sauerstoffderivaten durch Oxidation mit Sauerstoff herzustellen und die entstehenden Oxide CO und $CO_2$ zu minimieren (vgl. Stufe (a) oben). Der Ablauf des Verfahrens umfaßte die folgenden Schritte und führte zu den jeweils genannten Ergebnissen.

1. Katalysatorgeneration

**Schritt 1.** Die Auswahl der Hauptkomponenten erfolgte unter den Oxiden der Elemente V, Mo, Nb, Bi, P. Die Anteile der Hauptkomponenten wurden zwischen 0 und 50 mol-% variiert. Die Auswahl der Nebenkomponenten erfolgte unter den Oxiden der Elemente Mn, Sb, Sn und B. Die Anteile der Nebenkomponenten wurden zwischen 0 und 50 mol-% variiert. Die Auswahl der Dotierungskomponenten erfolgte unter den Oxiden der Elemente Cs sowie entweder Fe oder Co, entweder Ag oder Cu und entweder Ga oder In. Die Anteile der Dotierungskomponenten wurden zwischen 0 und 5 mol-% variiert. Es wurde Pd als weitere Dotierungskomponente verwendet, die entweder nicht oder mit einer Stoffmenge von $10^{-4}$ mol-% Pd eingebracht wurde. Als Trägerkomponente diente $Al_2O_3$, das entweder nicht oder in einer Menge von 50% Gew-% im Katalysator erhalten war.

Die Summe aller Massen- bzw. Molenanteile der Haupt-, Nebenund Dotierungs- und Trägerkomponten ergibt stets 100%.

**Schritt 2.** Die Katalysatoren, die zur Ausprüfung eingesetzt wurden, wurden durch folgendes Herstellungsverfahren gemäß erhalten: Verbindungen (Oxide, Oxalate oder Nitrate) der in Schritt 1 genannten Elemente wurden in wenig Wasser aufgelöst bzw. aufgeschlämmt, miteinander vermischt und die Mischung eingedampft. Der erhaltene Feststoff wurde 1 h bei 200 °C und 3 h bei 400 °C getrocknet, anschließend 1 h intensiv in einer Kugelmühle gemahlen und für 3 h bei 600 °C in Luft getempert.

**Schritt 3.** Die mittels der Zufallsgeneratoren G05DZF, G05CAF, G05DYF und G05CCF der NAG-Bibliothek (NAG FORTRAN Workstation Library, NAG Group Ltd., 1986) erhaltenen Katalysatorzusammensetzungen der 1. Generation sind in Tab. 1 zusammengefaßt.

**Schritt 4.** Die Ausprüfung der Katalysatoren erfolgte parallel in 6 Quarzreaktoren (Innendurchmesser 6 mm), die in eine beheiz- und kühlbare Sandwirbelschicht zur Thermostatisierung eingebracht wurden. Alternative Konfigurationen der parallelen Ausprüfung der Feststoffkatalysatoren sind gemäß obiger Beschreibung möglich.

Folgende Standardversuchsbedingungen wurden für die Ausprüfung der Katalysatoren gewählt: T = 500°C, $m_{Katalysator}$ = 1,0 g, $\dot{V}_{gesamt\ pro\ Reaktor}$ = 28 $ml_{STP}$ $min^{-1}$ mit $\dot{V}_{C3H8}$ = 0,8 $ml_{STP}$ $min^{-1}$, $\dot{V}_{O2}$ = 5,6 $ml_{STP}$ $min^{-1}$, $\dot{V}_{H2O}$ = 12,0 $ml_{STP}min^{-1}$, $\dot{V}_{Ar}$ = 21,6 $ml_{STP}$ $min^{-1}$.

Die Katalysatoren wurden für die Reaktion eingesetzt und hinsichtlich der unter den genannten Standardversuchsbedingungen erhaltenen Summe der Ausbeuten von Acrolein und Acrylsäure ausgeprüft (vgl. Stufe (b) oben; entspricht auch dieser Stufe im Anspruch 2). Die Konzentration von Propan, Propen, Ethylen, der entstandenen Sauerstoffderivate sowie von CO und $CO_2$ wurde mittels Gaschromatograph und Massenspektrometer analysiert.

**Schritt 5.** Die Ergebnisse der Testung der ersten Generation von Katalysatoren sind in Form der Summe der Ausbeuten von Acrolein und Acrylsäure in Tabelle 1 zusammengestellt. Es ergeben sich signifikante Unterschiede in den Ausbeuten der 30 getesteten Katalysatoren. Die besten 5 Katalysatoren (Nr. 4, 13, 17, 19, 21) enthalten bis auf Nr. 13 alle die Trägerkomponente. Gehäuft treten unter diesen besten Katalysatoren weiterhin Mo als Hauptkomponente sowie Sn als Nebenkomponenten. Bis auf Fe als Dotierungskomponente sind jedoch noch alle eingesetzten Katalysatorkomponenten in den besten 5 Katalysatoren der 1. Generation vertreten.

2. Katalysatorgeneration

**Schritt 6.** Die 2. Generation von Katalysatoren wurde erhalten, indem zunächst die 5 Katalysatoren Nr. 4, 19, 21, 13 und 17 mit der höchsten Oxygenatausbeute aus den 30 (entspricht 17 % der 1. Generation von Katalysatoren) zuvor ausgeprüften ausgewählt wurden (vgl. Stufe (c) oben).

**Schritt 7.** Die Zusammensetzungen von 10 neuen Katalysatoren der 2. Generation werden erhalten, indem

a) aus den Haupt-, Neben-, Dotierungs- und Trägerkomponenten der 5 besten Katalysatoren (Tab. 1.: Nr. 4, 19, 21, 13 und 17) 6 neue Kombinationen von Haupt-, Neben-, Dotierungs- und Trägerkomponenten gebildet werden (vgl. Stufe (d) oben), in dem z. B. für die Zusammensetzung des Katalysators Nr. 1 der 2. Generation (Tab. 2) zunächst der Katalysator Nr. 17 (im folgenden Katalysator Nr. = K.) mittels ZG1-Best5 [mittels der numerischen Zufallsgeneratoren G05DYF, G05DZF, G05CCF der NAG Library (NAG FORTRAN Workstation Library, NAG Group Ltd., 1986) aus den 5 besten Katalysatoren] ausgewählt wurde und danach mittels ZG1 [mittels der numerischen Zufallsgeneratoren G05DYF, G05DZF, G05CCF der NAG Library (NAG FORTRAN Workstation Library, NAG Group Ltd., 1986)] die Hauptkomponente Bi von K.17. Danach wurde K.21 (Tab.1) mittels ZG1-Best5 ausgewählt und dann mittels ZG1 die Hauptkomponente P von K.21. Danach wurde K.4 (Tab.1) mittels ZG1-Best5 ausgewählt und dann mittels ZG1 die Nebenkomponente Sn von K.4. Danach wurde K.21 mittels ZG1-Best5 ausgewählt und dann mittels ZG1 die Nebenkomponente B von K.21. Danach wurde K.14 (Tab.1) mittels ZG1-Best5 ausgewählt und dann mittels ZG1 die Spurenkomponente Fe von R.14. Danach wurde K.19 (Tab.1) mittels ZG1-Best5 ausgewählt und dann mittels ZG1 die Spurenkomponente Co von K.19. Danach wurde K.17 (Tab.1) mittels ZG1-Best5 ausgewählt und dann mittels ZG1 die Spuren- bzw. Dotierungskomponenten Cs und Pd von K.17. Die so ausgewählten Komponenten wurden mit ihren ursprünglichen molaren Mengen zu einer neuen Katalysatorzusammensetzung kombiniert. Analog wurden K.2, 3, 6, 7 und 8 der 2. Katalysatorgeneration (Tab.2) erhalten.

b) Es werden die molaren Anteile der Haupt-, Neben- und Dotierungskomponenten der zwei besten Katalysatoren mit der höchsten oxygenatausbeute (Tabelle 1, Nr. 4 und 19) gemäß obiger Stufe (d) verändert, indem die Komponenten Mo, Nb, Sb, Sn, Co und Ga von K.4 der ersten Generation mittels ZG1 ausgewählt wurden und die molaren Mengenanteile dieser ausgewählten Komponenten mittels ZG2 [mittels der numerischen Zufallsgeneratoren G05CAF, G05DZF, G05CCF der NAG Library (NAG FORTRAN Workstation Library, NAG Group Ltd., 1986)] stochastisch verändert wurden. Danach wurden die Komponenten Mo, Bi, P, sn und Co von K.19 der ersten Generation mittels ZG1 ausgewählt und die molaren Mengenanteile der ausgewählten Komponenten mittels ZG2 stochastisch verändert. Es wurden K.4 und K.5 der 2. Generation erhalten (Tab. 2). Analog wurden K.9 und K.10 der 2. Generation erhalten. Die Herstellung der insgesamt resultierenden 10 neuen Katalysatoren der 2. Generation erfolgt wie die der 1. Generation (Schritt 2).

**schritt 8.** Durch die im Schritt 7. geschilderte Vorgehensweise wurden 10 neue Katalysatorzusammensetzungen festgelegt, gemäß Vorschrift (vgl. Schritt 1.) hergestellt und parallel unter Standardbedingungen wie im Schritt 4. beschrieben ausgeprüft (vgl. obige Stufe (e). Die Ergebnisse sind in Tabelle 2 zusammengefaßt. Diese neuen Katalysatoren enthalten vermehrt Mo als Hauptkomponente und Sn als Nebenkomponente. Auch P als Hauptkomponente und Co als Dotierungskomponente, die bereits mit größerer Häufigkeit in den besten Katalysatoren der 1. Generation auftraten, sind in den neuen Katalysatoren der 2. Generation häufiger vertreten.

<u>3. Katalysatorgeneration</u>

**Schritt 9.** Aus den Mengen der 1. und 2. Katalysatorgeneration wurden wiederum die 5 Katalysatoren ausgewählt, die die höchste Ausbeute an Sauerstoffderivaten lieferten (vgl. obige Stufe (f)). Dies sind die Katalysatoren aus Tabelle 1: Nr.4, 19, 21 und aus Tabelle 2: Nr. 2, 3. Mit den 10 neuen Katalysatoren der 2. Generation werden zunächst keine höheren Ausbeuten als mit dem besten Katalysator der 1. Generation erzielt. Jedoch verdrängen die Katalysatoren Nr. 2 und 3 der 2. Generation die Katalysatoren Nr. 19 bzw. 21 vom 3. und 4. Rang (s.a. Fig. 1)

**Schritt 10.** Die Zusammensetzung von 10 neu herzustellenden Katalysatoren der 3. Generation wurde erhalten, indem mit den 5 in Schritt 9 ausgewählten Katalysatoren wie im Schritt 7 verfahren wurde (s. Tabelle 3, vgl. obige Stufe (g)). Es wurde daher K.4 (Tab.2) mittels ZG1-Best5 ausgewählt und dann mittels ZG1 die Hauptkomponente Nb von K.4 (Tab.2). Danach wurde K.21 (Tab.1) mittels ZG1-Best5 ausgewählt und dann mittels ZG1 die Hauptkomponente P von K.21 (Tab.1). Danach wurde K.3 (Tab.2) mittels ZG1-Best5 ausgewählt und dann mittels ZG1 die Spurenkomponente Fe von K.14. Danach wurde K.19 (Tab.1) mittels ZG1-Best5 ausgewählt und dann mittels ZG1 die Dotierungskomponente Co von K.3 (Tab.2). Danach wurde K.4 (Tab.1) mittels ZG1-Best5 ausgewählt und dann mittels ZG1 die Dotierungskomponente Ga von K.4. Danach wurde K.2 (Tab.2) mittels ZG1-Best5 ausgewählt und dann mittels ZG1 die Trägerkomponente von K.2 (Tab.2). Die so ausgewählten Komponenten wurden mit ihren ursprünglichen molaren Mengen zu einer neuen Katalysatorzusammensetzung kombiniert. Nach der Kombination wurde der Stoffmengenanteil der Hauptkomponente Nb mittels ZG3 [mittels der numerischen Zufallsgeneratoren G05CAF und G05CCF der NAG Library (NAG FORTRAN Workstation Library, NAG Group Ltd., 1986)] stochastisch verändert. Analog wurden K.2, 3, 6, 7 und 8 der 3. Katalysatorgeneration (Tab.3) erhalten.

b) Es wurde genau wie in Teil b) von Schritt 7 verfahren.

Es wurden K.4 und 5 der 3. Generation erhalten (Tab.3). Analog wurden K.9 und 10 der 3. Generation erhalten. Die Herstellung der insgesamt resultierenden 10 neuen Katalysatoren der 3. Generation erfolgt wie die der 1. und 2. Generation (Schritt 2 und 7).

**Schritt 11.** Die 10 neuen Katalysatoren der 3. Katalysatorgeneration wurden gemäß Vorschrift (vgl. Schritt 1.) hergestellt und parallel unter Standardbedingungen wie im Schritt 4. beschrieben ausgeprüft (vgl. obige Stufe (h)). Unter diesen 10 neuen Katalysatoren befinden sich nun 2 (Nr. 4 und Nr. 9), mit denen die bislang höchsten Ausbeuten überschritten werden. Somit werden die Katalysatoren Nr. 4 und 19 (Tabelle 1) vom 1. und 2. Rang verdrängt (vgl. Fig. 1).

**Schritt 12.** Die Auswahl von Katalysatorzusammensetzungen der Folge-Generationen (der n-ten Generation) erfolgte analog zu den Schritten 6. - 8. bzw. 9. - 11., in dem jeweils die 5 besten Katalysatoren aus allen bereits untersuchten Katalysatorgenerationen ausgewählt und für die Festlegung der Zusammensetzung der 10 neuen Katalysatoren der n.-ten Katalysatorgeneration verwendet wurden (vgl. obige Stufen (i), (j), (k)).

**Ergebnis:**

Werden die Zusammensetzungen der 5 besten Katalysatoren der 1.-3. Katalysatorgeneration verglichen, so zeigt sich, daß alle Katalysatoren Mo, Sn, Co und die Trägerkomponente enthalten. Die qualitativen Zusammensetzungen der 3 besten Katalysatoren sind nahezu identisch. Diese Katalysatoren enthalten alle Mo, Nb, Sb, Sn, Co, Ga und die Trägerkomponente. Die 2 besten Katalysatoren enthalten zusätzlich noch die Dotierungskomponenten Cu und Pd. Dies verdeutlicht, daß sich die Katalysatorzusammensetzungen mit fortschreitender Generationszahl einander annähern, d. h. störende Komponenten werden im Verlauf der Optimierung nicht mehr berücksichtigt und die Komponenten der Katalysatoren mit hohen oxygenatausbeuten werden dagegen bei der Festlegung neuer Katalysatorzusammentzungen verstärkt berücksichtigt. Bereits bei der 3. Katalysatorgeneration wird auf Basis dieser evolutionären Strategie eine 100% höhere Oxygenatausbeute als in der 1. Generation erzielt (Fig. 1).

**Beispiel 2**

Es wurden zunächst 20 Katalysatoren (Generation I), danach 10 Katalysatoren (Generation II und III) und schließlich weitere 10 Katalysatoren (Generation IV), ausgehend aus 13 Oxiden, die als primäre Katalysatorkomponente dienten, präpariert und in der oxidativen Dehydrierung von Propan getestet. Ziel was es, Propan zu Propen mit einer möglichst hohen Ausbeute und Selektivität durch die oxidative Dehydrierung herzustellen. Der Ablauf des Verfahrens umfaßte die folgenden Schritte und führte zu den jeweils genannten Ergebnissen.

1. Katalysatorgeneration

**Schritt 1.** Die Auswahl der Komponenten erfolgte unter den Oxiden der Elemente V, Mo, Mn, Fe, Zn, Ga, Ge, Nb, W, Co, Ni, Cd, In. Die Atomanteile der einzelnen Elemente in den Katalysatoren wurden zwischen 0 und 1 variiert. Jeder Katalysator enthält drei der Elemente V, Mo, Mn, Fe, Zn, Ga, Ge, Nb, W, Co, Ni, Cd, In. Die Summe aller Atomanteile dieser Elemente ergibt stets 1.

**Schritt 2.** Die mittels ZG4 [numerische Zufallsgeneratoren G05DZF, G05CAF, G05DYF, G05CCF der NAG-Bibliothek (NAG FORTRAN Workstation Library, NAG Group Ltd., 1986)] erhaltenen Katalysatorzusammensetzungen der 1. Generation sind in Tab. 4 zusammengefaßt.

**Schritt 3.** Die Katalysatoren, die zur Ausprüfung eingesetzt wurden, wurden durch folgendes Herstellungsverfahren erhalten: Verbindungen ($NH_4VO_3$, $(NH_4)_6Mo_7O_{24}\cdot 4H_2O$, $Mn(NO_3)_2\cdot 4H_2O$, $Fe(NO_3)_3\cdot 9H_2O$, $Zn(NO_3)_2\cdot 6H_2O$, $Ga_2O_3$, $GeO_2$, $Nb_2O_5$, $H_2WO_4$, $Co(NO_3)_2\cdot 6H_2O$, $Ni(NO_3)_2\cdot 6H_2O$, $Cd(NO_3)_2\cdot 4H_2O$, $In(NO_3)_3\cdot H_2O$) der in Schritt 1 genannten Elemente wurden in Wasser aufgelöst bzw. aufgeschlämmt, miteinander vermischt und die Mischung eingedampft. Der erhaltene Feststoff wurde 10 h bei 120°C getrocknet, anschließend 3 h bei 600 °C in Luft calciniert.

Tabelle 4.

| Zusammensetzung von Katalysatoren der ersten Generation | | | |
|---|---|---|---|
| Kat. No | Zusammensetzung | Kat. No | Zusammensetzung |
| 1/1 | $Fe_{0.79}Ga_{0.02}Nb_{0.19}O_x$ | 1/11 | $V_{0.47}W_{0.19}Ni_{0.33}O_x$ |
| 1/2 | $Mo_{0.44}Ni_{0.23}In_{0.33}O_x$ | 1/12 | $Mn_{0.41}Ga_{0.51}Nb_{0.08}O_x$ |

Tabelle 4. (fortgesetzt)

| Zusammensetzung von Katalysatoren der ersten Generation | | | |
|---|---|---|---|
| Kat. No | Zusammensetzung | Kat. No | Zusammensetzung |
| 1/3 | $Zn_{0.70}Ge_{0.08}Co_{0.22}O_x$ | 1/13 | $Mo_{0.45}Co_{0.22}In_{0.33}O_x$ |
| 1/4 | $V_{0.33}Fe_{0.43}Cd_{0.24}O_x$ | 1/14 | $Fe_{0.75}Ge_{0.05}W_{0.20}O_x$ |
| 1/5 | $Ga_{0.01}Nb_{0.33}Ni_{0.66}O_x$ | 1/15 | $V_{0.33}Mn_{0.43}Ni_{0.23}O_x$ |
| 1/6 | $Mo_{0.33}Zn_{0.42}In_{0.25}O_x$ | 1/16 | $Zn_{0.67}Nb_{0.1}Co_{0.23}O_x$ |
| 1/7 | $Ge_{0.11}W_{0.33}Cd_{0.56}O_x$ | 1/17 | $Mo_{0.33}Fe_{0.42}Cd_{0.25}O_x$ |
| 1/8 | $V_{0.26}Mn_{0.33}Ga_{0.41}O_x$ | 1/18 | $Ga_{0.01}W_{0.33}Ni_{0.66}O_x$ |
| 1/9 | $Nb_{0.16}Co_{0.33}In_{0.51}O_x$ | 1/19 | $Mn_{0.33}Zn_{0.41}In_{0.25}O_x$ |
| 1/10 | $Mo_{0.42}Ge_{0.44}Fe_{0.53}O_x$ | 1/20 | $Ge_{0.14}Co_{0.33}Cd_{0.53}O_x$ |

**schritt 4.** Die Ausprüfung der Katalysatoren erfolgte parallel in 6 Quarzreaktoren (Innendurchmesser 6 mm), die in eine beheiz- und kühlbare Sandwirbelschicht zur Thermostatisierung eingebracht wurden. Folgende Standardversuchsbedingungen wurden für die Ausprüfung der Katalysatoren gewählt: T = 500°C, $m_{Katalysator}$ = 0.3 g, $C_3H_8/O_2/N_2$ = 2/1/2, $\dot{V}_{gesamt\ pro\ Reaktor}$ = wurde zwischen 10 und 100 ml/min (STP) variant. Die Katalysatoren wurden für die Reaktion eingesetzt und hinsichtlich der unter den genannten Versuchsbedingungen erhaltenen Propanumsätze und Propenselektivitäten ausgeprüft (vgl. Stufe (b) oben). Die Konzentration von Propan, Propen, Ethylen, Methan und der entstandenen Sauerstoffderivate sowie von CO und $CO_2$ wurde mittels Gaschromatograph analysiert.

**Schritt 5.** Die Ergebnisse der Testung der ersten Generation von Katalysatoren (Propanumsatz, Propenselektivität und Propenausbeute) sind in Tabelle 5 dargestellt. Innerhalb der 20 getesteten Katalysatoren ergeben sich signifikante Unterschiede in den Ausbeuten, die ein Produkt des Umsatzes und der Selektivität sind. Vier Katalysatoren (Nr. 1/4, 1/8, 1/10, 1/15) zeigten die besten Ergebnisse für die katalytische Umsetzung.

Tabelle 5.

| Katalytische Ergebnisse der ersten Generation | | | | |
|---|---|---|---|---|
| Kat.-Nr. | Zusammensetzung | $X(C_3H_8)$ % | $S(C_3H_6)$ % | $Y(C_3H_6)$ % |
| 1/1 | $Fe_{0.79}\ Ga_{0.02}\ Nb_{0.19}$ | 10.7 | 17.7 | 1.9 |
| 1/2 | $Mo_{0.44}\ Ni_{0.23}\ In_{0.33}$ | 11.8 | 14.3 | 1.7 |
| 1/3 | $Zn_{0.70}\ Ge_{0.08}\ Co_{0.22}$ | 20.3 | 0.04 | 0.01 |
| 1/4 | $V_{0.33}\ Fe_{0.43}\ Cd_{0.24}$ | 15.3 | 24.5 | 3.7 |
| 1/5 | $Ga_{0.01}\ Nb_{0.33}\ Ni_{0.66}$ | 8.9 | 2.5 | 0.2 |
| 1/6 | $Mo_{0.33}\ Zn_{0.42}\ In_{0.25}$ | 1.3 | 26.2 | 0.3 |
| 1/7 | $Ge_{0.11}\ W_{0.33}\ Cd_{0.56}$ | 0.2 | 15.6 | 0.03 |
| 1/8 | $V_{0.26}\ Mn_{0.33}\ Ga_{0.41}$ | 6.9 | 43.4 | 3.0 |
| 1/9 | $Nb_{0.16}\ Co_{0.33}\ In_{0.51}$ | 15.2 | 12.1 | 1.8 |
| 1/10 | $Mo_{0.42}\ Ge_{0.44}\ Fe_{0.53}$ | 6.3 | 35.1 | 2.2 |
| 1/11 | $V_{0.47}\ W_{0.19}\ Ni_{0.33}$ | 44.6 | 2.3 | 1.0 |
| 1/12 | $Mn_{0.41}Ga_{0.51}\ Nb_{0.08}$ | 13.1 | 12.7 | 1.7 |
| 1/13 | $Mo_{0.45}Co_{0.22}\ In_{0.33}$ | 1.0 | 46.5 | 0.5 |
| 1/14 | $Fe_{0.75}\ Ge_{0.05}\ W_{0.20}$ | 16.0 | 12.9 | 2.1 |
| 1/15 | $V_{0.33}\ Mn_{0.43}\ Ni_{0.23}$ | 12.5 | 26.6 | 3.3 |
| 1/16 | $Zn_{0.67}\ Nb_{0.1}\ Co_{0.23}$ | 15.2 | 0.3 | 0.05 |
| 1/17 | $Mo_{0.33}\ Fe_{0.42}\ Cd_{0.25}$ | 2.1 | 7.7 | 0.2 |
| 1/18 | $Ga_{0.01}\ W_{0.33}\ Ni_{0.66}$ | 23.6 | 3.3 | 0.8 |

Tabelle 5. (fortgesetzt)

| Katalytische Ergebnisse der ersten Generation | | | | |
|---|---|---|---|---|
| Kat.-Nr. | Zusammensetzung | $X(C_3H_8)$ % | $S(C_3H_6)$ % | $Y(C_3H_6)$ % |
| 1/19 | $Mn_{0.33}$ $Zn_{0.41}$ $In_{0.25}$ | 15.7 | 9.5 | 1.5 |
| 1/20 | $Ge_{0.14}$ $Co_{0.33}$ $Cd_{0.53}$ | 14.6 | 8.6 | 1.3 |

2. Katalysatorgeneration

**Schritt 6.** Die 2. Generation von Katalysatoren wurde erhalten, indem zunächst die 4 Katalysatoren (Nr. 4, 8, 10, 15) mit dem besten katalytischen Verhalten ausgewählt und zur weiteren Modifizierung eingesetzt.

**Schritt 7.** Die Zusammensetzungen des neuen Katalysators 2/21 der 2. Generation wurde in ähnlicher Weise wie im Schritt 7 von Beispiel 1 beschrieben erhalten, ausgehend von K.1/15 und der Hauptkomponente V, dann K.1/8 und der Hauptkomoponente Ga, dann K.1/4 und der Hauptkomponente Cd, dann K.1/10 und der Nebenkomponente Ge. Die so ausgewählten Komponenten wurden mit ihren ursprünglichen molaren Mengen zu einer neuen Katalysatorzusammesnetzung kombiniert. Analog wurden die Katalysatoren 2/22 bis 2/30 der 2. Generation erhalten. Die Herstellung der insgesamt resultierenden 10 neuen Katalysatoren der 2. Generation erfolgt wie die der 1. Generation (Schritt 2).

**Schritt 8.** Durch die im Schritt 7. geschilderte Vorgehensweise wurden 10 neue Katalysatorzusammensetzungen festgelegt, gemäß Vorschrift (vgl. Schritt 3) hergestellt und parallel unter Standardbedingungen wie im Schritt 4. beschrieben ausgeprüft (vgl. Stufe (e) oben). Die Ergebnisse sind in Tabelle 6 zusammengefaßt

Tabelle 6.

| Zusammensetzungen und katalytische Ergebnisse der zweiten Generation. | | | | |
|---|---|---|---|---|
| Kat.-Nr. | Zusammensetzung | $X(C_3H_8)$ % | $S(C_3H_6)$ % | $Y(C_3H_6)$ % |
| 2/21 | $V_{0.33}Ga_{0.40}Cd_{0.23}Ge_{0.04}O_x$ | 2.4 | 54.0 | 1.3 |
| 2/22 | $V_{0.30}Fe_{0.48}Ni_{0.21}O_x$ | 26.1 | 1.4 | 0.4 |
| 2/23 | $V_{0.30}Fe_{0.48}Cd_{0.22}O_x$ | 13.8 | 20.2 | 2.8 |
| 2/24 | $V_{0.47}Mn_{0.22}Ga_{0.31}O_x$ | 17.0 | 37.0 | 6.3 |
| 2/25 | $Mo_{0.45}Fe_{0.25}Ge_{0.29}O_x$ | 0.2 | 66.9 | 0.1 |
| 2/26 | $Fe_{0.09}Ge_{0.33}Ni_{0.58}O_x$ | 16.7 | 1.8 | 0.3 |
| 2/27 | $V_{0.26}Mo_{0.33}Fe_{0.41}O_x$ | 17.4 | 22.4 | 3.9 |
| 2/28 | $Ga_{0.15}Ge_{0.33}Cd_{0.52}O_x$ | 2.7 | 6.2 | 0.2 |
| 2/29 | $V_{0.43}Mn_{0.54}Fe_{0.03}O_x$ | 16.4 | 34.1 | 5.6 |
| 2/30 | $V_{0.48}Ge_{0.19}Ni_{0.33}O_x$ | 43.1 | 0.4 | 0.2 |

3. Katalysatorgeneration

**Schritt 9.** Aus den Katalysatoren der 1. und 2. Katalysatorgeneration wurden wiederum 4 Katalysatoren mit der besten Leistung ausgewählt (Nr. 8, 24, 27, 29) (vgl. Stufe (f) oben) und als Basis für weitere Schritte eingesetzt.

**Schritt 10.** Die Zusammensetzung von 10 neu herzustellenden Katalysatoren der 3. Generation wurde erhalten, indem mit den 4 in Schritt 9 ausgewählten Katalysatoren wie im Schritt 7 bzw. wie in Schritt 10 von Beispiel 1 verfahren wurde (s. Tabelle 6, vgl. Stufe (g) oben), ausgehend von K.2/29 und der Hauptkomponente V, dann K. 2/27 und der Hauptkomoponente Mo, dann K.2/24 und der Hauptkomponente Mn. Die so ausgewählten Komponenten wurden mit ihren ursprünglichen molaren Mengen zu einer neuen Katalysatorzusammensetzung kombiniert. Analog wurden die Katalysatoren 3/52 bis 3/60 der 3. Generation erhalten (Tab.7). Die Herstellung der insgesamt resultierenden 10 neuen Katalysatoren der 3 Generation erfolgt wie die der 1. und 2. Generation (Schritt 2 und 7).

**Schritt 11.** Die 10 neuen Katalysatoren der 3. Katalysatorgeneration wurden gemäß Vorschrift (vgl. Schritt 3.) hergestellt und parallel unter Standardbedingungen wie im schritt 4. beschrieben ausgeprüft (vgl. Stufe (h) oben).

Tabelle 7.

| Zusammensetzungen und katalytische Ergebnisse der dritten Generation. | | | | |
|---|---|---|---|---|
| Kat.-Nr. | Zusammensetzungen | $X(C_3H_8)$/ % | $S(C_3H_6)$/% | $Y(C_3H_6)$/% |
| 3/51 | $V_{0.32}$ $Mo_{0.41}$ $Mn_{0.27}$ | 13.6 | 28.4 | 3.9 |
| 3/52 | $V_{0.26}$ $Mn_{0.33}$ $Ga_{0.41}$ | 20.4 | 29.9 | 6.1 |
| 3/53 | $V_{0.20}$ $Mn_{0.17}$ $Fe_{0.32}$ $Ga_{0.32}$ | 19.7 | 39.0 | 7.7 |
| 3/54 | $V_{0.47}$ $Mn_{0.13}$ $Ga_{0.38}$ | 19.8 | 31.9 | 6.3 |
| 3/55 | $V_{0.37}$ $Mn_{0.22}$ $Fe_{0.41}$ | 19.2 | 31.5 | 6.0 |
| 3/56 | $Mn_{0.15}$ $Fe_{0.33}$ $Ga_{0.52}$ | 13.9 | 6.7 | 0.9 |
| 3/57 | $V_{0.43}$ $Mo_{0.54}$ $Mn_{0.03}$ | 14.8 | 33.8 | 5.0 |
| 3/58 | $Mo_{0.48}$ $Fe_{0.18}$ $Ga_{0.33}$ | 2.2 | 59.8 | 1.3 |
| 3/59 | $V_{0.42}$ $Mo_{0.52}$ $Mn_{0.07}$ | 17.6 | 28.8 | 5.1 |
| 3/60 | $V_{0.46}$ $Fe_{0.21}$ $Ga_{0.33}$ | 17.4 | 33.5 | 5.8 |

**4. Katalysatorgeneration**

**Schritt 12.** Aus den Katalysatoren der 1. bis 3. Katalysatorgeneration wurden wiederum 4 Katalysatoren mit der besten Leistung ausgewählt (Nr. 24, 53, 54, 55) (vgl. Stufe (f) oben) und als Basis für die neuen Katalysatoren der 4. Generation eingesetzt.
**Schritt 13.** Die Zusammensetzung von 10 neu herzustellenden Katalysatoren der 4. Generation wurde erhalten, indem mit den 4 in Schritt 12 ausgewählten Katalysatoren wie im Schritt 7 verfahren wurde (s. Tabelle 6, vgl. Stufe (g) oben).
**Schritt 14.** Die 10 neuen Katalysatoren der 3. Katalysatorgeneration wurden gemäß Vorschrift (vgl. schritt 3.) hergestellt und parallel unter Standardbedingungen wie im Schritt 4. beschrieben ausgeprüft (vgl. Stufe (h) oben). Gemäß Fig. 2 wird bereits bei der 4. Generation eine deutliche Steigerung der Propenausbeute erzielt.

Tabelle 8.

| Zusammensetzungen und Ergebnisse 4. Generation | | | | |
|---|---|---|---|---|
| Kat.-Nr. | Zusammensetzung | $X(C_3H_8)$ % | $S(C_3H_6)$ % | $Y(C_3H_6)$ % |
| 4/71 | $V_{0.49}$ $Mn_{0.13}$ $Ga_{0.38}$ | 18.6 | 39.4 | 7.3 |
| 4/72 | $V_{0.53}$ $Mn_{0.14}$ $Fe_{0.34}$ | 18.8 | 27.1 | 5.1 |
| 4/73 | $V_{0.32}$ $Fe_{0.27}$ $Ga_{0.27}$ | 21.7 | 32.9 | 7.1 |
| 4/74 | $V_{0.19}$ $Mn_{0.24}$ $Fe_{0.32}$ $Ga_{0.25}$ | 22.3 | 35.9 | 8.0 |
| 4/75 | $V_{0.06}$ $Mn_{0.02}$ $Ga_{0.92}$ | 22.2 | 34.6 | 7.7 |
| 4/76 | $Mn_{0.5}$ $Fe_{0.16}$ $Ga_{0.33}$ | 21.6 | 32.6 | 7.0 |
| 4/77 | $V_{0.42}$ $Mn_{0.53}$ $Ga_{0.04}$ | 9.7 | 34.1 | 3.3 |
| 4/78 | $V_{0.47}$ $Fe_{0.19}$ $Ga_{0.33}$ | 22.2 | 33.0 | 7.3 |
| 4/79 | $V_{0.41}$ $Mn_{0.51}$ $Fe_{0.08}$ | 12.6 | 22.1 | 2.8 |
| 4/80 | $V_{0.45}$ $Fe_{0.22}$ $Ga_{0.33}$ | 20.9 | 33.4 | 7.0 |

Tabelle 1. 1. Katalysatorgeneration

| Nr. | Zusammensetzung Mol-% | | | | | | | | | | | | | | | | | | Ausbeute an $C_3$-Oxygenaten | Rang unter den 5 besten Katalysatoren - Generation |
|---|---|---|---|---|---|---|---|---|---|---|---|---|---|---|---|---|---|---|---|---|
| | Hauptkomponenten | | | | | Nebenkomponenten | | | | Dotierungen | | | | | | | Träger | Pd | Mol-% | |
| | V | Mo | Nb | Bi | P | Mn | Sb | Sn | B | Fe | Co | Cs | Ag | Cu | Ga | In | Ma-% | Ma-% | | 1 2 3 |
| 1 | 13,75 | 6,75 | 0 | 0 | 0 | 16,84 | 9,83 | 0 | 2,83 | 0.344 | 0 | 0 | 0 | 0 | 0 | 0 | 50 | 0.0001 | 0.000 | |
| 2 | 40.48 | 22.76 | 0 | 5,05 | 30,57 | 0 | 0 | 0 | 0 | 0 | 0 | 0 | 0 | 0 | 0 | 1.137 | 0 | 0.0001 | 0,000 | |
| 3 | 0 | 20,85 | 2.97 | 0 | 28.73 | 0 | 10.85 | 23.60 | 0 | 0 | 0 | 0 | 0.449 | 0 | 0 | 0 | 0 | 0.0001 | 0.034 | |
| 4 | 0 | 15.12 | 4.96 | 0 | 0 | 0 | 19,60 | 9.44 | 0 | 0 | 0,887 | 0 | 0 | 0 | 0.340 | 0 | 50 | 0 | 0.430 | 1. 1. 3. |
| 5 | 8,59 | 0 | 0 | 0 | 0 | 23.87 | 13,26 | 0 | 2.65 | 0.448 | 0 | 0.707 | 0,173 | 0 | 0 | 0 | 50 | 0.0001 | 0,005 | |
| 6 | 11.04 | 38.88 | 0 | 19.56 | 0.230 | 0 | 0 | 0 | 28.07 | 0.761 | 0 | 1,63 | 0 | 0 | 0 | 0,595 | 0 | 0 | 0.000 | |
| 7 | 0 | 0 | 29.53 | 12,88 | 0 | 36.86 | 20,22 | 0 | 0 | 0 | 0 | 0 | 0 | 0 | 0.372 | 0 | 0 | 0 | 0,025 | |
| 8 | 11,96 | 38,26 | 0 | 0 | 20.00 | 0 | 1,74 | 28,04 | 0 | 0 | 0 | 0 | 0.843 | 0 | 0 | 0 | 0 | 0,0001 | 0.007 | |
| 9 | 0 | 9.09 | 22.49 | 0 | 0 | 0 | 13,19 | 3,88 | 0 | 0,463 | 0 | 0.748 | 0,262 | 0 | 0 | 0.610 | 50 | 0 | 0.039 | |
| 10 | 10,14 | 0 | 1.54 | 13,93 | 0 | 0 | 5,33 | 0 | 17,72 | 0.218 | 0 | 0,305 | 0 | 0.467 | 0.763 | 0 | 50 | 0.0001 | 0.024 | |
| 11 | 0 | 0 | 0 | 6,09 | 0 | 0 | 29,09 | 0 | 13.12 | 1,232 | 0 | 0,410 | 0.987 | 0 | 0 | 0.427 | 50 | 0 | 0,011 | |
| 12 | 0 | 0 | 0 | 18.37 | 6,77 | 0 | 0 | 0 | 23,48 | 0,287 | 0 | 0,398 | 0,607 | 0 | 0 | 0,986 | 50 | 0,0001 | 0,030 | |
| 13 | 0 | 6,69 | 34,53 | 0 | 0 | 0 | 0 | 15,20 | 43,04 | 0 | 0 | 0,548 | 0 | 0 | 0 | 0 | 0 | 0,0001 | 0.082 | 4. |
| 14 | 0 | 11,33 | 4,54 | 0 | 14,33 | 7,53 | 0,73 | 0 | 10,53 | 0.321 | 0 | 0,668 | 0.226 | 0 | 0 | 0,343 | 50 | 0 | 0,016 | |
| 15 | 0 | 20,09 | 11,40 | 0 | 0 | 0 | 0 | 2,70 | 15,23 | 0 | 0 | 0,582 | 0 | 0 | 0 | 0 | 50 | 0,0001 | 0,053 | |
| 16 | 10,37 | 1,67 | 0 | 14,20 | 5,50 | 0 | 0 | 18,04 | 0 | 0 | 0,222 | 0 | 0 | 0 | 0 | 0 | 50 | 0 | 0,045 | |
| 17 | 8,56 | 2,90 | 0 | 11,06 | 5,40 | 0 | 0 | 13,55 | 7.89 | 0 | 0 | 0,198 | 0 | 0,435 | 0,166 | 0 | 50 | 0.0001 | 0,077 | 5. |
| 18 | 14,11 | 0 | 5,89 | 17,74 | 0 | 0 | 9,51 | 1,28 | 0 | 0.318 | 0 | 0,495 | 0,640 | 0 | 0 | 0,340 | 50 | 0 | 0.011 | |
| 19 | 0 | 9,11 | 0 | 23,40 | 13,48 | 0 | 0 | 3,56 | 0 | 0 | 0,466 | 0 | 0 | 0 | 0 | 0 | 50 | 0,0001 | 0,215 | 2. 2. 4. |
| 20 | 27,10 | 15,00 | 0 | 2,90 | 20,33 | 0 | 0 | 8,23 | 25,66 | 0 | 0 | 0,318 | 0 | 0,452 | 0,700 | 0 | 0 | 0,0001 | 0,015 | |
| 21 | 0 | 0 | 0,187 | 0 | 18,58 | 5,69 | 0 | 0 | 24,25 | 0 | 1,069 | 0,393 | 0 | 0 | 0 | 0 | 50 | 0 | 0,085 | 3. 5. |
| 22 | 0 | 0 | 29,61 | 12,82 | 0 | 37,00 | 20,21 | 0 | 0 | 0 | 0,363 | 0 | 0,939 | 0 | 0 | 0 | 0 | 0 | 0,001 | |
| 23 | 0 | 0 | 0 | 39,59 | 0 | 3,10 | 55,66 | 0 | 0 | 0 | 0 | 1,652 | 0 | 0 | 0,346 | 0 | 0 | 0,0001 | 0,001 | |
| 24 | 20.70 | 5,98 | 0 | 27,18 | 12,47 | 33,67 | 0 | 0 | 0 | 0 | 0 | 0 | 0 | 0 | 0 | 0 | 0 | 0 | 0,005 | |
| 25 | 0 | 0 | 0 | 31,94 | 7,13 | 0 | 42,87 | 18,06 | 0 | 1,723 | 0 | 0 | 0 | 0 | 0,474 | 0 | 0 | 0.0001 | 0,018 | |
| 26 | 11,51 | 0 | 38,74 | 19,84 | 0 | 0 | 0 | 0,94 | 28,17 | 0 | 0 | 0,801 | 0 | 0 | 0 | 0 | 0 | 0,0001 | 0,002 | |
| 27 | 6,69 | 17,04 | 0 | 9.85 | 2,67 | 0 | 0 | 13.02 | 0 | 0 | 0,531 | 0 | 0 | 0 | 0 | 0.208 | 50 | 0.0001 | 0,014 | |
| 28 | 22.58 | 9,24 | 0 | 0 | 28,46 | 15,12 | 0 | 1,77 | 21,00 | 0 | 0,659 | 0,328 | 0 | 0,454 | 0,691 | 0 | 0 | 0,0001 | 0,000 | |
| 29 | 0 | 0 | 19,95 | 0 | 11,41 | 0 | 2,87 | 15,17 | 0 | 0 | 0 | 0,597 | 0 | 0 | 0,240 | 0 | 50 | 0 | 0,004 | |
| 30 | 29,36 | 11,64 | 0 | 37,17 | 19,45 | 0 | 0 | 1,73 | 0 | 0 | 0,649 | 0 | 0 | 0 | 1,001 | 0 | 0 | 0 | 0,002 | |

Tabelle 2. 2. Katalysatorgeneration

| Nr. ($y_2$) | Zusammensetzung Mol-% | | | | | | | | | | | | | | | | | | Ausbeute an $C_3$-Oxygenaten | Rang unter den 5 besten Katalysatoren Generation | |
|---|---|---|---|---|---|---|---|---|---|---|---|---|---|---|---|---|---|---|---|---|---|
| | Hauptkomponenten | | | | | Nebenkomponente | | | | Dotierungen | | | | | | | Träger | Pd | | | |
| | V | Mo | Nb | Bi | P | Mn | Sb | Sn | B | Fe | Co | Cs | Ag | Cu | Ga | In | Ma-% | Ma-% | Mol-% | 2 | 3 |
| 1 | 0 | 0 | 0 | 8.54 | 14.34 | 0 | 0 | 7,28 | 18.72 | 0.83 | 0.825 | 0,303 | 0 | 0 | 0 | 0 | 50 | 0.0001 | 0,037 | | |
| 2 | 0 | 10.82 | 0 | 0 | 22.07 | 0 | 0 | 16.10 | 0 | 0.55 | 0.553 | 0.467 | 0 | 0 | 0 | 0 | 50 | 0.0001 | 0,184 | 3. | 5. |
| 3 | 0 | 15.47 | 0 | 0 | 19.01 | 0 | 0 | 13.87 | 0 | 0 | 0.908 | 0.402 | 0 | 0 | 0.325 | 0 | 50 | 0 | 0,161 | 4. | |
| 4 | 0 | 2.87 | 15.14 | 0 | 0 | 0 | 26.50 | 4.22 | 0 | 0 | 0.738 | 0 | 0 | 0 | 0.536 | 0 | 50 | 0.0001 | 0,001 | | |
| 5 | 0 | 11.79 | 0 | 11.48 | 1.35 | 0 | 0 | 24.43 | 0 | 0 | 0.952 | 0 | 0 | 0 | 0 | 0 | 50 | 0.0001 | 0.024 | | |
| 6 | 0 | 4.37 | 3.24 | 7.22 | 12.13 | 0 | 12.80 | 9.93 | 0 | 0 | 0.300 | 0 | 0 | 0 | 0 | 0 | 50 | 0.0001 | 0,020 | | |
| 7 | 0 | 0 | 0 | 0 | 26.54 | 0 | 0 | 21.71 | 0 | 0 | 1.270 | 0 | 0 | 0 | 4.810 | 0 | 50 | 0.0001 | 0,024 | | |
| 8 | 6.42 | 6.82 | 0 | 0 | 13.92 | 4,27 | 0 | 11.39 | 5.91 | 0 | 0.670 | 0.150 | 0 | 0.330 | 0.120 | 0 | 50 | 0.0001 | 0,000 | | |
| 9 | 0 | 4.04 | 9.23 | 0 | 0 | 0 | 20.15 | 13.75 | 0 | 0 | 2.090 | 0 | 0 | 0 | 0.740 | 0 | 50 | 0.0001 | 0,003 | | |
| 10 | 0 | 3.09 | 0 | 26.10 | 5.85 | 0 | 0 | 13.69 | 0 | 0 | 1.270 | 0 | 0 | 0 | 0 | 0 | 50 | 0.0001 | 0,000 | | |

Tabelle 3. 3. Katalysatorgeneration

| Nr. ($y_3$) | Zusammensetzung Mol-% | | | | | | | | | | | | | | | | | | Ausbeute an $C_3$-Oxygenaten Mol-% | Rang unter den 5 besten Katalysatoren |
|---|---|---|---|---|---|---|---|---|---|---|---|---|---|---|---|---|---|---|---|---|
| | Hauptkomponenten | | | | | Nebenkomponente | | | | Dotierungen | | | | | | | Träger | Pd | | |
| | V | Mo | Nb | Bi | P | Mn | Sb | Sn | B | Fe | Co | Cs | Ag | Cu | Ga | In | Ma-% | Ma-% | | |
| 1 | 0 | 0 | 31.78 | 0 | 17.10 | 0 | 0 | 0 | 0 | 0 | 0.82 | 0 | 0 | 0 | 0.31 | 0 | 50 | 0.0001 | 0,006 | |
| 2 | 0 | 6.34 | 24.05 | 0 | 12.94 | 0 | 0 | 0 | 5,50 | 0 | 0,62 | 0,14 | 0 | 0.30 | 0.12 | 0 | 50 | 0.0001 | 0,096 | |
| 3 | 0 | 6.40 | 14.62 | 9,90 | 0 | 0 | 0 | 0 | 18.22 | 0 | 0.38 | 0.23 | 0 | 0.12 | 0.07 | 0 | 50 | 0 | 0,010 | |
| 4 | 0 | 34,61 | 0.87 | 0 | 0 | 0 | 5.37 | 8.28 | 0 | 0 | 0.43 | 0 | 0 | 0.07 | 0.45 | 0 | 50 | 0.0001 | 0,821 | 2. |
| 5 | 0 | 19.45 | 0 | 13.27 | 2.67 | 0 | 0 | 13.64 | 0 | 0 | 0.96 | 0 | 0 | 0.45 | 0 | 0 | 50 | 0.0001 | 0,035 | |
| 6 | 0 | 5.94 | 4.40 | 9.82 | 0 | 0 | 17.40 | 12.03 | 0 | 0 | 0.41 | 0 | 0 | 0 | 0 | 0 | 50 | 0.0001 | 0,000 | |
| 7 | 0 | 0 | 7.47 | 0 | 20.29 | 0 | 0 | 20.40 | 0 | 0 | 1.34 | 0 | 0 | 0 | 0.51 | 0 | 50 | 0.0001 | 0.050 | |
| 8 | 0 | 8.70 | 4.74 | 0 | 12.88 | 0 | 0 | 14.53 | 7.54 | 0 | 0.85 | 0.19 | 0 | 0.51 | 0.16 | 0 | 50 | 0 | 0,161 | |
| 9 | 0 | 17.74 | 4.63 | 0 | 0 | 0 | 15.86 | 10.15 | 0 | 0 | 0.43 | 0 | 0 | 0.16 | 1.20 | 0 | 50 | 0.0001 | 0,965 | 1. |
| 10 | 0 | 1.66 | 0 | 31.55 | 7.22 | 0 | 0 | 9.00 | 0 | 0 | 0.56 | 0 | 0 | 1.20 | 0 | 0 | 50 | 0.0001 | 0.063 | |

## Patentansprüche

**1.** Verfahren zur Herstellung aktiver oder selektiver Feststoff-Katalysatoren aus anorganischen oder metallorganischen Stoffen oder Gemischen davon durch Auswahl einer bestimmten Anzahl von chemisch oder mengenmäßig oder chemisch und mengenmäßig unterschiedlich zusammengesetzten Feststoff-Katalysatoren und Ermittlung von wesentlichen Katalysatoreigenschaften, **dadurch gekennzeichnet, daß** für eine bestimmte katalytische Reaktion bei den hinsichtlich Aktivität oder Selektivität oder Aktivität und Selektivität besten Katalysatoren der jeweiligen Generation in Form bestimmter chemischer Verbindungen die einzelnen Katalysatorkomponenten oder Stoffmengen der Katalysatorkomponenten oder Katalysatorkomponenten und Stoffmengen mittels Kreuzung und Mutation, ausgewählt unter den stochastischen Verfahren Einsatz von Zufallsgeneratoren, Würfeln und/oder Ziehungen willkürlich oder zufällig neu strukturiert werden, wobei

(a) eine Anzahl $n_1$ von Feststoff-Katalysatoren hergestellt werden, die in Form von Verbindungen der Formel

$$(A^1_{a_1} .. A^i_{a_i})\text{-}(B^1_{b_1} .. B^j_{b_j})\text{-}(D^1_{d_1}\text{-}D^k_{d_k})\text{-}(T^1_{t_1} .. T^l_{t_l})\text{-}O_p \qquad \text{(I)}$$

bestehen,
worin $A^1$ .. $A^i$ eine Anzahl i verschiedene Haupkomponenten sind, die aus der Gruppe der Elemente des PSE, ausgenommen die Transurane und Edelgase ausgewählt werden und die Anzahl i zwischen 1 und 10 liegt,
$B^1$ .. $B^j$ eine Anzahl j verschiedene Nebenkomponenten sind, die aus der Gruppe der Elemente Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce und Nd ausgewählt werden, und die Anzahl j zwischen 1 und 10 liegt,
$D^1$ .. $D^k$ eine Anzahl k verschiedene Dotierungselemente sind, die aus der Gruppe der Elemente Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, Si, Sn, Pb, N, P, As, Sb, Bi, S, Se, Te, F, Cl, Ce und Nd ausgewählt werden, und die Anzahl k zwischen 1 und 10 liegt,
$T^1$ .. $T^l$ eine Anzahl l verschiedene Trägerkomponenten sind, die aus Oxiden, Carbonaten, Carbiden, Nitriden, Boriden der Elemente Mg, Ca, Sr, Ba, La, Zr, Ce, Al, Si oder einer Mischphase von zwei oder mehreren davon bestehen, und die Anzahl l zwischen 1 und 10 liegt,
und O Sauerstoff ist,
$a_1..a_i$ sind gleiche oder verschiedene Stoffmengenanteile von 0 bis 100 Mol-% mit der Maßgabe, daß die Stoffmengenanteile $a_1..a_i$ nicht gleichzeitig alle 0 sein können,
$b_1$ .. $b_j$ Stoffmengenanteile von 0 bis 90 Mol.-% sind,
$d_1$ .. $d_k$ Stoffmengenanteile von 0 bis 10 Mol.-% sind,
$t_1$ .. $t_l$ Stoffmengenanteile von 0 bis 99,99 Mol.-% sind,
p ein Stoffmengenanteil von 0 bis 75 Mol.-% ist, wobei die Summe aller Stoffmengenanteile $a_i + b_j + d_k + t_1$ nicht größer als 100% sein darf, und
die Anzahl $n_1$ mengenmäßig oder chemisch oder mengenmäßig und chemisch unterschiedlich zusammengesetzter Katalysatoren im Bereich von 5 bis 100.000 liegt;
(b) die Aktivität oder Selektivität oder Aktivität und Selektivität der nach (a) hergestellten $n_1$ Feststoff-Katalysatoren der 1. Generation für eine katalytische Reaktion in einem Reaktor oder in mehreren parallel geschalteten Reaktoren experimentell ermittelt werden;
(c) von der Anzahl der $n_1$ Katalysatoren der 1. Generation eine Anzahl von 1 - 50 % mit den höchsten Aktivitäten für eine spezifische Reaktion oder höchsten Selektivitäten für das gewünschte Produkt oder Produktgemisch der katalytischen Reaktion oder Aktivität und Selektivität als Anzahl $n_2$ ausgewählt wird;
(d) die in der Anzahl $n_2$ Katalysatoren enthaltenen Katalysatorkomponenten mit einer festgelegten Wahrscheinlichkeit W, die sich für jede der Komponenten $A^1$ .. $A^i$, $B^1$ .. $B^j$, $D^1$ .. $D^k$ und $T^1$ .. $T^l$ aus den entsprechenden Gleichungen

$$W_A = \frac{1}{i \cdot n_2} \cdot 100\%,\ W_B = \frac{1}{j \cdot n_2} \cdot 100\%,\ W_D = \frac{1}{k \cdot n_2} \cdot 100\%,\ W_T = \frac{1}{l \cdot n_2} \cdot 100\%$$

ergibt, zwischen jeweils 2 mit einer Wahrscheinlichkeit $W_{Kat} = \frac{1}{n_2} \cdot 100\%$ aus der Menge $n_2$ ausgewählten Katalysatoren ausgetauscht werden oder daß die Stoffmengen $a_1$ .. $a_i$, $b_1$ .. $b_j$, $d_1$ .. $d_k$ und $t_1$ .. $t_l$ der Katalysatorkomponenten $A^1$ .. $A^i$, $B^1$ .. $B^j$, $D^1$ .. $D^k$ und $T^1$ .. $T^l$ bei einigen der mit der Wahrscheinlichkeit $W_{Kat} = \frac{1}{n_2}$

$\cdot$ *100%* ausgewählten Katalysatoren variiert werden, indem neue Werte für die Stoffmengenanteile $a_1$ .. $a_i$, $b_1$ .. $b_j$, $d_1$ .. $d_k$ und $t_1$ .. $t_l$ innerhalb der unter (a) definierten Grenzen festgelegt werden, oder daß Austausch und Variierung durchgeführt werden;

auf diese Weise werden neue Katalysatoren der allgemeinen Formel (I) mit der unter (a) genannten Bedeutung von A, B, D, T, a, b, d, t und p in einer Anzahl $y_2$ hergestellt, die die 2. Generation von Katalysatoren bilden;

(e) die Aktivitäten oder Selektivitäten oder Aktivitäten und Selektivitäten der $y_2$ Feststoff-Katalysatoren der 2. Generation für die gleiche spezifische Reaktion wie in (b) in einem oder mehreren Reaktoren experimentell ermittelt werden;

(f) eine Zahl von $n_3$ Feststoff-Katalysatoren der 2. Generation, die die höchsten Aktivitäten für die katalytische Umsetzung oder die höchsten Selektivitäten für das gewünschte Produkt und Produktgemisch oder Aktivitäten und Selektivitäten aus allen Feststoff-Katalysatoren der 1. und 2. Generation aufweisen, ausgewählt werden, wobei die Anzahl $n_3$ 1 bis 50 % der Zahl $n_1$ entspricht;

(g) die in der Anzahl $n_3$ Katalysatoren enthaltenen Katalysatorkomponenten mit einer festgelegten Wahrscheinlichkeit W, die sich für jede der Komponenten $A^1$ .. $A^i$, $B^1$ .. $B^j$, $D^1$ .. $D^k$ und $T^1$ .. $T^l$ aus den entsprechenden Gleichungen

$$W_A = \frac{1}{i \cdot n_3} \cdot 100\%,\ W_B = \frac{1}{j \cdot n_3} \cdot 100\%,\ W_D = \frac{1}{k \cdot n_3} \cdot 100\%,\ W_T = \frac{1}{l \cdot n_3} \cdot 100\%$$

ergibt, zwischen jeweils 2 mit einer Wahrscheinlichkeit $W_{Kat} = \frac{1}{n_3} \cdot 100\%$ aus der Menge $n_3$ ausgewählten Katalysatoren ausgetauscht werden oder daß die Stoffmengen $a_1$ .. $a_i$, $b_1$ .. $b_j$, $d_1$ .. $d_k$ und $t_1$ .. $t_l$ der Katalysatorkomponenten $A^1$ .. $A^i$, $B^1$ .. $B^j$, $D^1$ .. $D^k$ und $T^1$ .. $T^l$ bei einigen der mit der Wahrscheinlichkeit $W_{Kat} = \frac{1}{n_3} \cdot 100\%$ ausgewählten Katalysatoren variiert werden, indem neue Werte für die Stoffmengenanteile $a_1$ .. $a_i$, $b_1$ .. $b_j$, $d_1$ .. $d_k$ und $t_1$ .. $t_l$ innerhalb der unter (a) definierten Grenzen festgelegt werden, oder daß Austausch und Variierung durchgeführt werden;

auf diese Weise werden neue Katalysatoren der allgemeinen Formel (I) mit der unter (a) genannten Bedeutung von A, B, D, T, a,b,d,t und p in einer Anzahl $y_3$ hergestellt, die die 3. Generation von Katalysatoren bilden;

(h) die Aktivität oder Selektivität oder Aktivität und Selektivität der nach (g) hergestellten $y_3$ neuen Katalysatoren der 3. Generation für die gleiche spezifische Reaktion wie unter (b) in einem oder mehreren Reaktoren ermittelt wird;

(i) eine Zahl von $n_{n+1}$ Feststoff-Katalysatoren der 1. bis n-ten Generation, die die höchsten Aktivitäten für die katalytische Umsetzung oder die höchsten Selektivitäten für das gewünschte Produkt und Produktgemisch oder Aktivität und Selektivität aus allen Feststoff-Katalysatoren aufweisen, ausgewählt werden, wobei die Anzahl $n_{n+1}$ 1 bis 50 % der Zahl $n_1$ entspricht;

(j) die in der Anzahl $n_{n+1}$ Katalysatoren enthaltenen Katalysatorkomponenten mit einer festgelegten Wahrscheinlichkeit W, die sich für jede der Komponenten $A^1$ .. $A^i$, $B^1$ .. $B^j$, $D^1$ .. $D^k$ und $T^1$ .. $T^l$ aus den entsprechenden Gleichungen

$$W_A = \frac{1}{i \cdot n_{n+1}} \cdot 100\%,\ W_B = \frac{1}{j \cdot n_{n+1}} \cdot 100\%,\ W_D = \frac{1}{k \cdot n_{n+1}} \cdot 100\%,\ W_T = \frac{1}{l \cdot n_{n+1}} \cdot 100\%$$

ergibt, zwischen jeweils 2 mit einer Wahrscheinlichkeit $W_{Kat} = \frac{1}{n_{n+1}} \cdot 100\%$ aus der Menge $n_{n+1}$ ausgewählten Katalysatoren ausgetauscht werden oder daß die Stoffmengen $a_1$ .. $a_i$, $b_1$ .. $b_j$, $d_1$ .. $d_k$ und $t_1$ .. $t_l$ der Katalysatorkoroponenten $A^1$ .. $A^i$, $B^1$ .. $B^j$, $D^1$ .. $D^k$ und $T^1$ .. $T^l$ bei einigen der mit der Wahrscheinlichkeit $W_{Kat} = \frac{1}{n_{n+1}} \cdot 100\%$ ausgewählten Katalysatoren variiert werden, indem neue Werte für die Stoffmengenanteile $a_1$ .. $a_i$, $b_1$ .. $b_j$, $d_1$ .. $d_k$ und $t_1$ .. $t_l$ innerhalb der unter (a) definierten Grenzen festgelegt werden, oder daß Austausch und Varuerung durchgeführt werden;

auf diese Weise werden neue Katalysatoren der allgemeinen Formel (I) mit der unter (a) genannten Bedeutung von A, B, D, T, a, b, d, t und p in einer Anzahl $y_{n+1}$ hergestellt, die die (n+1)-ten Generation von Katalysatoren bilden;

(k) die Aktivität oder Selektivität oder Aktivität und Selektivität der nach (g) hergestellten $y_{n+1}$ neuen Katalysatoren der (n+1)-ten Generation für die gleiche Reaktion wie unter (b) in einem oder mehreren Reaktoren ermittelt wird;

(l) die Auswahl gemäß den Stufen (c) + (f) + (i), die Herstellung einer neuen Katalysatorgeneration gemäß den Stufen (d), (g), (j) und die Aktivitäts-/Selektivitätsermittlung gemäß den Stufen (e) + (h) + (k) bis zum Erhalt einer Katalysator-Generation fortgeführt wird, bei der die Aktivität oder Selektivität oder Aktivität und Selektivität gegenüber den vorangegangenen Generationen im arithmetischen Mittel nicht oder nicht mehr signifikant erhöht ist.

**2.** Verfahren nach Anspruch 1, **dadurch gekennzeichnet, daß** der Austausch der Katalysatoren oder die Variierung der Stoffmengen oder Austausch und Variierung in den Abschnitten (d), (g) und (j) mittels eines numerischen Zufallsgenerators durchgeführt wird.

**3.** Verfahren nach Anspruch 2, **dadurch gekennzeichnet, daß** die Programmcodes G05CAP, G05DYF, G05D2F und G05CCF der NAG Library (NAG FORTRAN Workstation Library, NAG Group Ltd., 1986) eines numerischen Zufallsgenerators eingesetzt werden.

**4.** Verfahren nach Anspruch 1(a), **dadurch gekennzeichnet, daß** die Anzahl $n_1$ mengenmäßig oder chemisch oder mengenmäßig und chemisch unterschiedlich zusammengesetzter Katalysatoren im Bereich von 5 bis 100 liegt.

**5.** Verfahren nach Anspruch 1, **dadurch gekennzeichnet, daß** die Auswahlanzahl $n_2$, $n_3$ oder $n_{n+1}$ 5 bis 30 % der Zahl $n_1$ entspricht.

**6.** Verfahren nach Anspruch 1, **dadurch gekennzeichnet, daß** die Hauptkomponenten aus der Gruppe ausgewählt werden, bestehend aus Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce und Nd.

**7.** Verfahren nach Anspruch 1, **dadurch gekennzeichnet, daß** die Stoffmengenanteile $b_1$ .. $b_j$ von 0 bis 50 Mol.-% betragen.

**8.** Verfahren nach Anspruch 1, **dadurch gekennzeichnet, daß** die Herstellung der Katalysatorgemische durch Mischen von Salzlösungen der Elemente der Komponente $A^1$ .. $A^i$, $B^1$ .. $B^j$, $D^1$ .. $D^k$ und $T^1$ .. $T^l$ und anschließende thermische Behandlung in Gegenwart einer reaktiven oder inerten Gasphase (Temperung) oder durch gemeinsame Fällung von schwerlöslichen Verbindungen und anschließende Temperung oder durch Beaufschlagung der Trägerkomponenten $T^1$ .. $T^l$ mit Salzlösungen oder gasförmigen Verbindungen der Komponenten $A^1$ .. $A^i$, $B^1$ .. $B^j$, $D^1$ .. $D^k$ und anschließende Temperung erfolgt, wobei die eingesetzten Salze Nitrate, Sulfate, Phosphate, Carbonate, Halogenide, Oxalate, Carboxylate oder Gemische davon oder Carbonyle oder Acetylacetonate sein können.

**9.** Verfahren nach Anspruch 1, **dadurch gekennzeichnet, daß** die katalytische Reaktion mit flüssigen, verdampften oder gasförmigen Reaktanten durchgeführt wird.

**10.** Verfahren nach Anspruch 1, **dadurch gekennzeichnet, daß** zur Durchführung der katalytischen Reaktion 5 bis 1000 Reaktoren,bestehend aus Räumen mit darin angeordnetem katalytisch aktiven Material parallel zueinander geschaltet oder in Arrays angeordnet sind, wobei die Durchmesser dieser Räume 100 μm bis 10 mm und die Längen 1 mm bis 1 mm betragen, und der die Reaktoren verlassende Produktstrom für jeden einzelnen Reaktor getrennt analysiert wird.

**11.** Verfahren nach Anspruch 1, **dadurch gekennzeichnet, daß** die Reaktanten für die katalytische Reaktion den gemäß Anspruch 10 gestalteten Reaktoren zugeführt werden, und die Zusammensetzung der die Reaktoren verlassenden Produktströme durch eine Meßsonde analysiert wird, wobei die Meßsonde zweidimensional über die Austrittsquerschnitte aller Reaktoren geführt wird oder die Reaktoren zweidimensional gegenüber der Meßsonde bewegt werden und der von der Meßsonde aufgenommene Teil der Produktströme dem Analysator zugeführt wird.

## Claims

**1.** A method for preparing active or selective solid catalysts
of inorganic or organometallic materials or mixtures thereof by selecting a certain number of solid catalysts of different chemical composition or different weight composition or different chemical and different weight composition and determination of essential catalyst properties, comprising arbitrarily or randomly newly structuring by means of crossing and mutation, selected among the stochastic methods of random-check generators, throwing dice, and/or performing drawings, the individual catalyst components or amounts of mass of the catalyst components or the catalyst components and amounts of mass, wherein
a number $n_1$ of solid catalysts of the elements of the periodic table of the elements (PTE) in the form of compounds

of the formula (I)

$$\left(A^1_{a_1}..A^i_{a_i}\right)-\left(B^1_{b_1}..B^j_{b_j}\right)-\left(D^1_{d_1}..D^k_{d_k}\right)-\left(T^1_{t_1}..T^l_{t_l}\right)-O_p \qquad \text{(I)}$$

are prepared, wherein $A^1$ .. $A^i$ is a quantity i of different main components which are selected from the elements of the PTE, except trans uranium and noble gas elements, and the number i is between 1 and 10,
$B^1$ .. $B^j$ is a quantity j of different minor components selected from the group of the elements Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce and Nd, and the number j is between 1 and 10,
$D^1$ .. $D^k$ is a quantity k of different doping elements which are selected from the group of the elements Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, Si, Sn, Pb, N, P, As, Sb, Bi, S, Se, Te, F, Cl, Ce and Nd and the number k is between 1 and 10, $T^1$ .. $T^l$ is a quantity l of different support components which are comprised of oxides, carbonates, carbides, nitrides, borides of the elements Mg, Ca, Sr, Ba, La, Zr, Ce, Al, Si or a mixed phase of two or more thereof, and the number l is between 1 and 10,
and 0 is oxygen,
$a_1..a_i$ are identical or different mole fractions of 0 to 100 mole-% with the provision that the mole fractions $a_1..a_i$ cannot all at the same time be 0,
$b_1$ .. $b_j$ are mole fractions of 0 to 90 mole-%,
$d_1$ .. $d_k$ are mole fractions of 0 to 10 mole-%,
$t_1$ .. $t_l$ are mole fractions of 0 bis 99.99 mole-%,
p is a mole fraction of 0 to 75 mole-%, wherein the sum of all mole fractions $a_i + b_j + d_k + t_l$ may be not greater than 100 %, and
the number $n_1$ of catalysts with different quantitate composition or different chemical composition or different weight and chemical compositions is in the range of 5 to 100,000;

(b) the activity or selectivity or activity and selectivity of the $n_1$ solid catalysts prepared according to (a) of the first generation is determined experimentally for a catalytic reaction in a reactor or in several reactors switched parallel;

(c) a number of 1 - 50 % is selected as number $n_2$ from the number $n_1$ of the catalysts of the first generation having the highest activities for a specific reaction or highest selectivities for the desired product or product mixture of the catalytic reaction or activity and selectivity;

(d) the catalyst components contained in the number $n_2$ of the catalysts with a pre-set probability W, which results for each of the components $A^1$ .. $A^i$, $B^1$ .. $B^j$, $D^1$ .. $D^k$ and $T^1$ .. $T^l$ from the corresponding equations

$$W_A = \frac{1}{i \cdot n_2} \cdot 100\%,\ W_B = \frac{1}{j \cdot n_2} \cdot 100\%,\ W_D = \frac{1}{k \cdot n_2} \cdot 100\%,\ W_T = \frac{1}{l \cdot n_2} \cdot 100\%$$

are exchanged between two catalysts selected from the number $n_2$ with a probability of $W_{cat} = \frac{1}{n_2} \cdot 100\%$ or that the amount of mass $a_1$ .. $a_i$, $b_1$ .. $b_j$, $d_1$ .. $d_k$ and $t_1$ .. $t_l$ of the catalyst components $A^1$ .. $A^i$, $B^1$ .. $B^j$, $D^1$ .. $D^k$ and $T^1$ .. $T^l$ for some of the catalysts selected with a probability of $W_{cat} = \frac{1}{n_2} \cdot 100\%$ are varied in that new values for the mole fractions $a_1$ .. $a_i$, $b_1$ .. $b_j$, $d_1$ .. $d_k$ and $t_1$ .. $t_l$ are determined within the limits defined under (a); or that exchange and variation are performed;
in this way new catalysts of the general formula (I) with the meaning of A, B, D, T, a, b, d, and t and p as defined under (a) are produced in a number $y_2$ which form the catalysts of the second generation;

(e) the activities or selectivities or activities and selectivities of the $y_2$ solid catalysts of the second generation are determined experimentally for the same specific reaction as in (b) in one or more reactors;

(f) a number of the $n_3$ catalysts of the second generation, having the highest activities for a specific reaction or highest selectivities for the desired product and product mixture or the activities and selectivities of all solid catalysts of the first and second generation, is selected, wherein the number $n_3$ is 1 to 50 % of the number $n_1$;

(g) the catalyst components contained in the number $n_3$ of the catalysts with a pre-set probability W, which results for each of the components $A^1 .. A^i$, $B^1 .. B^j$, $D^1 .. D^k$ and $T^1 .. T^l$ from the corresponding equations

$$W_A = \frac{1}{i \cdot n_3} \cdot 100\%,\ W_B = \frac{1}{j \cdot n_3} \cdot 100\%,\ W_D = \frac{1}{k \cdot n_3} \cdot 100\%,\ W_T = \frac{1}{l \cdot n_3} \cdot 100\%$$

are exchanged between two catalysts selected from the number $n_3$ with a probability of $W_{cat} = \frac{1}{n_3} \cdot 100\%$ or the amount of mass $a_1 .. a_i$, $b_1 .. b_j$, $d_1 .. d_k$ and $t_1 .. t_l$ of the catalyst components $A^1 .. A^i$, $B^1 .. B^j$, $D^1 .. D^k$ and $T^1 .. T^l$ for some of the catalysts selected with a probability of $W_{cat} = \frac{1}{n_3} \cdot 100\%$ are varied in that new values for the mole fractions $a_1 .. a_i$, $b_1 .. b_j$, $d_1 .. d_k$ and $t_1 .. t_l$ are determined within the limits defined under (a), or exchange and variation are performed;
in this way new catalysts of the general formula (I) with the meaning of A, B, D, T, a, b, d and t and p defined under (a) are produced in a number $y_3$ which form the catalysts of the third generation;

(h) the activity or selectivity or activity and selectivity of the $y_3$ new solid catalysts of the third generation prepared according to (g) is determined experimentally for the same specific reaction as in (b) in one or more reactors;

(i) a number of $n_{n+1}$ solid catalysts of the first to n-th generation, having the highest activities for a catalytic conversion or the highest selectivities for the desired product and product mixture or activity and selectivity of all solid catalysts, is selected, wherein the number $n_{n+1}$ is 1 to 50 % of the number $n_1$;

(j) the catalyst components contained in the number $n_{n+1}$ of the catalysts with a pre-set probability W, which results for each of the components $A^1 .. A^i$, $B^1 .. B^j$, $D^1 .. D^k$ and $T^1 .. T^l$ from the corresponding equations

$$W_A = \frac{1}{i \cdot n_{n+1}} \cdot 100\%,\ W_B = \frac{1}{j \cdot n_{n+1}} \cdot 100\%,\ W_D = \frac{1}{k \cdot n_{n+1}} \cdot 100\%,\ W_T = \frac{1}{l \cdot n_{n+1}} \cdot 100\%$$

are exchanged between two catalysts selected from the number $n_{n+1}$ with a probability of $W_{cat} = \frac{1}{n_{n+1}} \cdot 100\%$ or that the amount of mass $a_1 .. a_i$, $b_1 .. b_j$, $d_1 .. d_k$ and $t_1 .. t_l$ of the catalyst components $A^1 .. A^i$, $B^1 .. B^j$, $D^1 .. D^k$ and $T^1 .. T^l$ for some of the catalysts selected with a probability of $W_{cat} = \frac{1}{n_{n+1}} \cdot 100\%$ are varied in that new values for the mole fractions $a_1 .. a_i$, $b_1 .. b_j$, $d_1 .. d_k$ and $t_1 .. t_l$ are determined within the limits defined under (a), or that exchange and variation are performed;
in this way new catalysts of the general formula (I) with the meaning of A, B, D, T, a, b, d and t and p as defined under (a) are produced in a number $y_{n+1}$ which form the catalysts of the (n+1)-th generation;

(k) the activity or selectivity or activity and selectivity is of the $y_{n+1}$ solid catalysts of the (n+1)-th generation prepared according to (g) is determined experimentally for the same specific reaction as in (b) in one or more reactors;

(l) the selection according to the steps (c) + (f) + (i), the preparation of a new catalyst generation according to the steps (d), (g), (j), and the activity/selectivity determination according to the steps (e) + (h) + (k) is continued up to obtaining a catalyst generation in which the activity or selectivity or activity and selectivity relative to the previous generations as an arithmetic mean is not increased or no longer significantly increased.

**2.** The method according to claim 1, wherein the exchange of the catalysts or the variation of the amount of mass or exchange and variation in the portions (d), (g), and (j) are carried out by means of a numerical random-check generator.

**3.** The method according to claim 2, wherein the program codes G05CAF, G05DYF, G05DZF and G05CCF of the NAG Library (NAG FORTRAN Workstation Library, NAG Group Ltd., 1986) of a numerical random-check generator are used.

**4.** The method according to claim 1(a), wherein the quantity $n_1$ is in the range of 5 to 100 for catalysts which are different with regard to their weight composition or chemical composition or weight and chemical composition.

**5.** The method according to claim 1, wherein the selection number $n_2$, $n_3$, or $n_{n+1}$ is 5 to 30 % of the quantity $n_1$.

**6.** The method according to claim 1, wherein the main components are selected from the group comprised of Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce und Nd.

**7.** The method according to claim 1, wherein the mole fractions $b_1$ .. $b_j$ are from 0 to 50 mole-%.

**8.** The method according to claim 1, wherein the preparation of the catalyst mixtures is carried out by mixing salt solutions of the elements of the components $A^1$ .. $A^i$, $B^1$ .. $B^j$, $D^1$ .. $D^k$ and $T^1$ .. $T^l$ and subsequent thermal treatment in the presence of a reactive or inert gas phase (tempering) or by common precipitation of sparingly soluble compounds and subsequent tempering or by loading of the support component $T^1$ .. $T^l$ with salt solutions or gaseous compounds of the components $A^1$ .. $A^i$, $B^1$ .. $B^j$, $D^1$ .. $D^k$ and subsequent tempering, wherein the employed salts are nitrates, sulfates, phosphates, carbonates, halogenides, oxalates, carboxylates, or mixtures thereof or carbonyl compounds or as acetyl acetonates.

**9.** The method according to claim 1, wherein the catalytic reaction is carried out with liquid, evaporated, or gaseous reactants.

**10.** The method according to claim 1, wherein for performing the catalytic reaction 5 to 1,000 reactors comprised of spaces with catalytically active material arranged therein are arranged parallel to one another or arranged in arrays, wherein the diameter of these spaces is 100 μm to 10 mm and the lengths are 1 mm to 100 mm, and the product stream exiting the reactors is separately analyzed for each individual reactor.

**11.** The method according to claim 1, wherein the reactants for the catalytic reaction are supplied to the reactors according to claim 10, and wherein the composition of the product streams exiting the reactors is analyzed by a measuring sensor, wherein the measuring sensor is guided two-dimensionally across the exit cross-section of all reactors or the reactors are moved two-dimensionally relative to the measuring sensor and the portion of the product streams received by the measuring sensor is supplied to the analytical device.

**Revendications**

**1.** Procédé de préparation de catalyseurs solides actifs ou sélectifs à partir de substances inorganiques ou métallo-organiques ou de mélanges de celles-ci en sélectionnant un nombre déterminé de catalyseurs solides composés différemment au niveau chimique ou quantitatif ou chimique et quantitatif et en déterminant les propriétés essentielles des catalyseurs, **caractérisé en ce que** l'on restructure arbitrairement ou aléatoirement les différents composants de catalyseurs ou quantités de substances au moyen du croisement et de la mutation, qui sont choisis en utilisant les procédés stochastiques des générateurs aléatoires, les dés et/ou les tirages, pour une réaction catalytique déterminée dans les meilleurs catalyseurs de la génération respective, en ce qui concerne l'activité ou la sélectivité ou l'activité et la sélectivité, se présentant sous forme de composés chimiques déterminés, où

(a) on prépare pour une réaction catalytique un nombre $n_1$ de catalyseurs solides à partir d'éléments du système périodique des éléments (PSE) sous la forme de composés de la formule (I) -

$$(A^1_{a_1} \,..A^i_{a_i})\text{-}(B^1_{b_1} \,..B^j_{b_j})\text{-}(D^1_{d_1}..D^k_{d_k})\text{-}(T^1_{t_1} \,..T^l_{t_l})\text{-}O_p \qquad \text{(I)}$$

dans laquelle $A^1$ .. $A^i$ sont i composants principaux différents qui sont choisis parmi les éléments de la PSE, à l'exception des transuranes et des gaz précieux, de préférence parmi le groupé

Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce et Nd et le nombre i se situe entre 1 et 10,

$B^1$ .. $B^j$ sont j composants secondaires différents qui sont choisis parmi le groupe des éléments :

Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce et Nd et le nombre j se situe entre 1 et 10,

$D^1$ .. $D^k$ sont k éléments différents de dopage qui sont choisis parmi le groupe des éléments

Li, Na, Ka, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, Si, Sn, Pb, N, P, As, Sb, Bi, S, Se, Te, F, Cl, Ce et Nd et le nombre k se situe entre 1 et 10,

$T^1$ .. $T^l$ sont l composants supports différents qui sont constitués d'oxydes, de carbonates, de carbures, de nitrures, de borures des éléments Mg, Ca, Sr, Ba, La, Zr, Ce, Al, Si ou d'une phase mixte de deux ou plusieurs de ceux-ci, et le nombre l se situe entre 1 et 10, et 0 est l'oxygène,

$a_1$ .. $a_i$ sont des pourcentages de quantité de matières identiques ou différents allant de 0 à 100 % en moles à la condition que les pourcentages de quantité de matières $a_1$ .. $a_i$ ne puissent pas être tous 0 en même temps,

$b_1$ .. $b_j$ sont des pourcentages de quantité de matières allant de 0 à 90 % en moles, de préférence de 0 à 50 % en moles,

$d_1$ .. $d_k$ sont des pourcentages de quantité de matières allant de 0 à 10 % en moles,

$t_1$ .. $t_l$ sont des pourcentages de quantité de matières allant de 0 à 99,9 % en moles,

p est un pourcentage de quantité de matières allant de 0 à 75 % en moles, la somme de tous les pourcentages de quantité de matières $a_i + b_j + d_k + t_l$ ne devant pas être supérieure à 100 %,

le nombre $n_1$ des catalyseurs composés différemment au niveau chimique et/ou quantitatif se situe dans la plage allant de 5 à 100 000, de préférence cependant dans la zone de 5 à 100 ;

(b) l'activité et/ou la sélectivité des $n_1$ catalyseurs solides de la première génération préparés d'après (a) sont déterminées pour une réaction catalytique dans un réacteur ou dans plusieurs réacteurs montés en parallèle dans une expérience ;

(c) on choisit, parmi un nombre de $n_1$ catalyseurs de la première génération, un nombre allant de 1 à 50 %, présentant les activités maximales pour une réaction spécifique ou les sélectivités maximales pour le produit ou le mélange de produit désiré de la réaction catalytique, comme nombre $n_2$ ;

(d) on échange les composants de catalyseurs contenus dans le nombre $n_2$ de catalyseurs d'une probabilité fixée W, qui résulte pour chaque composant $A^1$ .. $A^i$, $B^1$ .. $B^j$, $D^1$ .. $D^k$ et $T^1$ .. $T^l$ des égalités correspondantes

$$W_A = \frac{1}{i \cdot n_2} \cdot 100\%,\ W_B = \frac{1}{j \cdot n_2} \cdot 100\%,\ W_D = \frac{1}{k \cdot n_2} \cdot 100\%,\ W_T = \frac{1}{l \cdot n_2} \cdot 100\%$$

entre respectivement 2 catalyseurs choisis parmi la quantité $n_2$, ayant une probabilité

$$W_{Kat} = \frac{1}{n_2} \cdot 100\%$$

et/ou si bien que les quantités de matières $a_1$ .. $a_i$, $b_1$ .. $b_j$, $d_1$ .. $d_k$ et $t_1$ .. $t_l$ des composants des catalyseurs $A^1$ .. $A^i$, $B^1$ .. $B^j$, $D^1$ .. $D^k$ et $T^1$ .. $T^l$ soient modifiées dans quelques-uns uns des catalyseurs choisis ayant la probabilité

$$W_{Kat} = \frac{1}{n_2} \cdot 100\%$$

en fixant de nouvelles valeurs pour les pourcentages de quantité $a_1$ .. $a_i$, $b_1$ .. $b_j$, $d_1$ .. $d_k$ et $t_1$ .. $t_l$ dans des limites définies au (a) ;

on prépare de cette manière de nouveaux catalyseurs de formule générale (I) ayant la signification citée au (a) de $A^1$ .. $A^i$, $B^1$ .. $B^j$, $D^1$ .. $D^k$ et $T^1$ .. $T^l$, $a_1$ .. $a_i$, $b_1$ .. $b_j$, $d_1$ .. $d_k$ et $t_1$ .. $t_l$ et p en un nombre $y_2$ qui constituent la deuxième génération de catalyseurs ;

(e) les activités et/ou sélectivités des $y_2$ catalyseurs solides de la deuxième génération sont déterminées pour la même réaction spécifique que dans (b) dans un ou plusieurs réacteurs dans une expérience ;

(f) on choisit un nombre de $n_3$ catalyseurs solides de la deuxième génération présentant les activités maximales pour la réaction catalytique ou les sélectivités maximales pour le produit ou le mélange de produit désiré parmi tous les catalyseurs solides de la première et la deuxième génération, le nombre $n_3$ correspondant à 1 à 50 % du nombre $n_1$ ;

(g) on remplace les composants de catalyseurs contenus dans le nombre $n_3$ de catalyseurs d'une probabilité fixée W, qui résulte pour chaque composant $A^1$ .. $A^i$, $B^1$ .. $B^j$, $D^1$ .. $D^k$ et $T^1$ .. $T^l$ des égalités correspondantes

$$W_A = \frac{1}{i \cdot n_3} \cdot 100\%,\ W_B = \frac{1}{j \cdot n_3} \cdot 100\%,\ W_D = \frac{1}{k \cdot n_3} \cdot 100\%,\ W_T = \frac{1}{l \cdot n_3} \cdot 100\%$$

entre respectivement 3 catalyseurs choisis parmi la quantité $n_3$, ayant une probabilité

$$W_{Kat} = \frac{1}{n_3} \cdot 100\%$$

et/ou si bien que les quantités de matières $a_1 .. a_i$, $b_1 .. b_j$, $d_1 .. d_k$ et $t_1 .. t_l$ des composants des catalyseurs composant $A^1 .. A^i$, $B^1 .. B^j$, $D^1 .. D^k$ et $T^1 .. T^l$ soient modifiées dans quelques uns des catalyseurs choisis ayant la probabilité

$$W_{Kat} = \frac{1}{n_3} \cdot 100\%$$

en fixant de nouvelles valeurs pour les pourcentages de quantité $a_1 .. a_i$, $b_i .. b_j$, $d_1 .. d_k$ et $t_1 .. t_l$ dans des limites définies au (a) ;

on prépare de cette manière de nouveaux catalyseurs de formule générale (I) ayant la signification citée au (a) de $A^1 .. A^i$, $B^1 .. B^j$, $D^1 .. D^k$ et $T^1 .. T^l$, $a_1 .. a_i$, $b_1 .. b_j$, $d_1 .. d_k$ et $t_1 .. t_l$ et p en un nombre $y_3$ qui constituent la troisième génération de catalyseurs ;

(h) l'activité et/ou la sélectivité des $y_3$ nouveaux catalyseurs solides de la troisième génération préparés d'après (g) sont déterminées pour la même réaction spécifique que dans(b) dans un réacteur ou dans plusieurs réacteurs ;

(i) on choisit un nombre de $n_{n+1}$ de catalyseurs de la $n^{ième}$ génération présentant les activités maximales pour la réaction catalytique ou les sélectivités maximales pour le produit ou le mélange de produit désiré parmi tous les catalyseurs solides de la première à la $n^{ième}$ génération, le nombre $n_{n+1}$ correspondant à 1 à 50 % du nombre $n_1$ ;

(j) on échange les composants de catalyseurs contenus dans le nombre $n_{n+1}$ de catalyseurs d'une probabilité fixée W, qui résulte pour chaque composant $A^1 .. A^i$, $B^1 .. B^j$, $D^1 .. D^k$ et $T^1 .. T^l$ des égalités correspondantes

$$W_A = \frac{1}{i \cdot n_{n+1}} \cdot 100\%,\ W_B = \frac{1}{j \cdot n_{n+1}} \cdot 100\%,\ W_D = \frac{1}{k \cdot n_{n+1}} \cdot 100\%,\ W_T = \frac{1}{l \cdot n_{n+1}} \cdot 100\%$$

entre respectivement 2 catalyseurs choisis parmi la quantité $n_{n+1}$, ayant une probabilité

$$W_{Kat} = \frac{1}{n_{n+1}} \cdot 100\%$$

et/ou si bien que les quantités de matières $a_1 .. a_i$, $b_1 .. b_j$, $d_1 .. d_k$ et $t_1 .. t_l$ des composants des catalyseurs $A^1 .. A^i$, $B^1 .. B^j$, $D^1 .. D^k$ et $T^1 .. T^l$ soient modifiées dans quelques uns des catalyseurs choisis ayant la probabilité

$$W_{Kat} = \frac{1}{n_{n+1}} \cdot 100\%$$

en fixant de nouvelles valeurs pour les pourcentages de quantité $a_1 .. a_i$, $b_1 .. b_j$, $d_1 .. d_k$ et $t_1 .. t_l$ dans des limites définies au (a) ;

on prépare de cette manière de nouveaux catalyseurs de formule générale (I) ayant la signification citée au (a) de $A^1 .. A^i$, $B^1 .. B^j$, $D^1 .. D^k$ et $T^1 .. T^l$, $a_1 .. a_i$, $b_1 .. b_j$, $d_1 .. d_k$ et $t_1 .. t_l$ et p en un nombre $y_{n+1}$ qui constituent la $(n+1)^{ième}$ génération de catalyseurs ;

(k) l'activité et/ou la sélectivité des $y_{n+1}$ nouveaux catalyseurs solides de la $(n+1)^{ième}$ génération préparés d'après (g) sont déterminées pour la même réaction que dans(b) dans un réacteur ou dans plusieurs réacteurs ;

(l) La sélection selon les étapes (c) + (f) + (i), la préparation d'une nouvelle génération de catalyseurs selon les étapes (d), (g), (j) et la détermination de l'activité /sélectivité selon les étapes (e) + (h) + (k) sont poursuivies jusqu'à obtention d'une génération de catalyseurs dans laquelle l'activité et/ou la sélectivité n'est pas ou plus augmentée significativement (> 1 %) par rapport aux générations précédentes en moyenne arithmétique.

**2.** Procédé selon la revendication 1, **caractérisé en ce que** l'échange des catalyseurs ou la modification des quantités de substance ou l'échange et la modification sont réalisés dans les étapes (d), (g) et. (j) au moyen d'un générateur de nombres aléatoires.

**3.** Procédé selon la revendication 2, **caractérisé en ce que** l'on utilise les codes de programme G0SCAF G05DYF, G05DZF et G05CCF de la librairie NAG (NAG FORTRAN Workstation Library, NAG Group Ltd., 1986) d'un générateur de nombres aléatoires.

**4.** Procédé selon la revendication 1(a), **caractérisé en ce que** le nombre $n_1$ des catalyseurs composés différemment au niveau chimique ou quantitatif ou chimique et quantitatif se situe dans la plage allant de 5 à 100.

**5.** Procédé selon la revendication 1, **caractérisé en ce que** le nombre de sélection $n_2$, $n_3$ ou $n_{n+1}$ correspond de préférence à 5 à 30 % du nombre $n_1$.

**6.** Procédé selon la revendication 1, **caractérisé en ce que** les composants principaux sont choisis parmi le groupe constitué de Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce et Nd.

**7.** Procédé selon la revendication 1, **caractérisé en ce que** les pourcentages de quantité de matières $b_1$ .. $b_j$ vont de 0 à 50 % en moles.

**8.** Procédé selon la revendication 1, **caractérisé en ce que** la préparation des mélanges de catalyseurs s'effectue avantageusement par mélange de solutions de sel des éléments des composants $A^1$ .. $A^i$, $B^1$ .. $B^j$, $D^1$ .. $D^k$ et $T^1$ .. $T^l$ et par traitement thermique consécutif en présence d'une phase gazeuse inerte ou réactive (désignée dans ce qui suit le recuit) ou par précipitation commune de composés difficilement solubles et recuit consécutif ou par admission des composants supports $T^1$ .. $T^l$ avec des solutions ou des composés gazeux des composants $A^1$ .. $A^i$, $B^1$ .. $B^j$, $D^1$ .. $D^k$ et recuit consécutif, les sels mis en oeuvre pouvant être des nitrates, sulfates, phosphates, carbonates, halogénures, oxalates, carboxylates ou mélanges de ceux-ci ou des carbonyles ou acétonates d'acétyle.

**9.** Procédé selon la revendication 1, **caractérisé en ce que** la réaction catalytique est réalisée avec des réactifs liquides, sous forme vapeur ou gazeuse.

**10.** Procédé selon la revendication 1, **caractérisé en ce, que** pour réaliser la réaction catalytique, on monte 5 à 1000 réacteurs, constitués de chambres renfermant la matière catalytiquement active, en parallèle ou en rangées, le diamètre de ces chambres atteignant 100 µm à 10 mm et la longueur 1 mm à 100 mm, et que le flux de produit quittant les réacteurs est analysé séparément pour chaque réacteur.

**11.** Procédé selon la revendication 1, **caractérisé en ce que** les réactifs pour la réaction catalytique sont avantageusement ajoutés aux réacteurs montés selon la revendication 10 et la composition des flux de produit quittant les réacteurs est analysée par un capteur, ledit capteur étant introduit en deux dimensions par le biais de la section transversale de sortie de tous les réacteurs ou les réacteurs étant mis en mouvement en deux dimensions par rapport au capteur et la partie des flux de produit recueillie par le capteur étant amenée à l'analyseur.

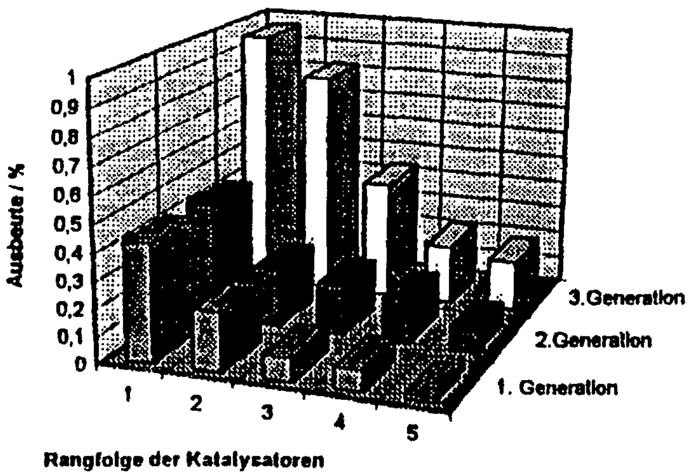
1
0,9
0,8
0,7
0,6
0,5
0,4
0,3
0,2
0,1
0
Ausbeute / %
1
2
3
4
5
Rangfolge der Katalysatoren
3.Generation
2.Generation
1. Generation

Fig. 1

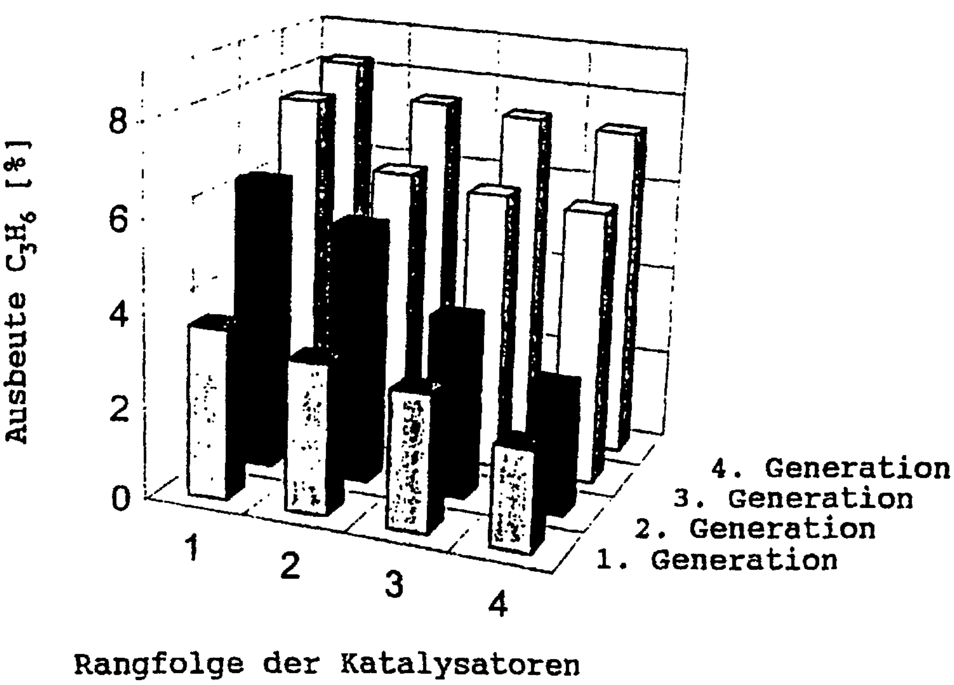
8
6
4
2
0
Ausbeute $C_3H_6$ [%]
1
2
3
4
Rangfolge der Katalysatoren
4. Generation
3. Generation
2. Generation
1. Generation

Fig. 2